# EUROPÄISCHE PATENTSCHRIFT

(11) **EP 4 122 987 B1**
(45) Veröffentlichungstag und Bekanntmachung des Hinweises auf die Patenterteilung: **27.09.2023**
(21) Anmeldenummer: 21187007.6
(22) Anmeldetag: 21.07.2021
(51) Int. Cl.: C09D 5/00

(54) **WÄSSRIGER BESCHICHTUNGSSTOFF, BESCHICHTUNG ERHALTEN MIT DEM BESCHICHTUNGSSTOFF, BESCHICHTETES SUBSTRAT, VERWENDUNG DES BESCHICHTUNGSSTOFFS UND VERFAHREN ZUR HERSTELLUNG DES WÄSSRIGEN BESCHICHTUNGSSTOFFS**
AQUEOUS COATING MATERIAL, COATING OBTAINED WITH THE COATING MATERIAL, COATED SUBSTRATE, USE OF THE COATING MATERIAL AND METHOD FOR PREPARING THE AQUEOUS COATING MATERIAL
MATIÈRE AQUEUSE DE REVÊTEMENT, REVÊTEMENT OBTENU POURVU DE MATIÈRE DE REVÊTEMENT, SUBSTRAT REVÊTU, UTILISATION DE LA MATIÈRE DE REVÊTEMENT ET PROCÉDÉ DE FABRICATION DE LA MATIÈRE AQUEUSE DE REVÊTEMENT

(43) Veröffentlichungstag der Anmeldung: 25.01.2023
(73) Patentinhaber: DAW SE, 64372 Ober-Ramstadt (DE)
(72) Erfinder: BEFURT, Uwe, 64372 Ober-Ramstadt (DE); BRENNER, Thomas, 64372 Ober-Ramstadt (DE); GROSSKOPF, Jan, 64372 Ober-Ramstadt (DE); WALTER, Christian, 64372 Ober-Ramstadt (DE); HEIL, Stefanie, 64372 Ober-Ramstadt (DE); BREIVOGEL, Aaron, 64372 Ober-Ramstadt (DE); OTTENS, Stephan, 64372 Ober-Ramstadt (DE)
(74) Vertreter: Metten, Karl-Heinz

(56) Entgegenhaltungen:
- EP-A1- 2 338 941
- EP-A1- 3 385 339
- WO-A1-2006/056644
- WO-A2-01/57142
- WO-A2-2006/110961
- DE-U1-202017 007 369

## Beschreibung

Die vorliegende Erfindung betrifft einen wässriger Beschichtungsstoff, insbesondere Dispersionsbeschichtungsstoff, eine Beschichtung, erhalten mit dem erfindungsgemäßen wässrigen Beschichtungsstoff, insbesondere Dispersionsbeschichtungsstoff, ein beschichtetes Substrat, enthaltend die erfindungsgemäße Beschichtung, die Verwendung des erfindungsgemäßen wässrigen Beschichtungsstoffs, insbesondere Dispersionsbeschichtungsstoffs, für die Herstellung von oder als Dispersionsinnenfarbe, Dispersionsaußenfarbe, Spachtelmasse, Lack, Lasur, Bautenkleber, Armierungsmasse, Grundierungsmasse, Putzmasse oder Farbpaste oder für die Beschichtung oder Renovierung von Gebäudefassaden sowie ein Verfahren zur Herstellung des wässrigen Beschichtungsstoffs.

Die DE 20 2017 007369 U1 und die EP 3 385 339 A1 stellen ab auf wässrige Beschichtungsstoffe, enthaltend a) organische Bindemittel in einer Menge kleiner oder gleich 30 Gew.-% (Feststoffanteil), b) Wasserglas und/oder Kieselsol in einer Menge kleiner 1,5 Gew.-% (Feststoffanteil) und c) 15 bis 70 Gew.-% an mindestens einem Pigment und/oder mindestens einem Füllstoff. Solche Beschichtungsstoffe sollen sich kostengünstig herstellen lassen und sich gleichzeitig hinsichtlich Farbeindruck und der mechanischen Beständigkeit durch ein nutzerfreundliches Eigenschaftsprofil auszeichnen.

Die EP 2 338 941 A1 zeigt eine wässrige Beschichtungsformulierung, umfassend: (a) 25 bis 99 Gew.-% eines wässrigen Trägers, umfassend Wasser und mindestens ein Harz; (b) bis zu 20 Gew.-% eines Pigments; (c) 0,01 bis 5 Gew.-% einer Diaminoalkoholverbindung mit der Formel: 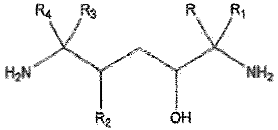 worin R unabhängig Wasserstoff, Alkyl, Aryl oder -CH2OH ist; R1 unabhängig Wasserstoff, Alkyl oder -CH2OH ist; alternativ können R und R1 miteinander verbunden sein, um ein Cycloalkyl zu bilden; R2 unabhängig Wasserstoff, Methyl, Alkyl, Phenyl oder substituiertes Phenyl ist; R3 unabhängig Wasserstoff, Alkyl, Phenyl oder substituiertes Phenyl oder -CH2OH ist; R4 unabhängig Wasserstoff, Alkyl oder -CH2OH ist; und alternativ können R3 und R4 miteinander verbunden sein, um ein Cycloalkyl zu bilden; wobei alle Gewichtsprozentangaben auf dem Gesamtgewicht der wässrigen Beschichtungsformulierung basieren. Die Aminoverbindungen gemäß der EP 2 338 941 A1 sollen geruchsarme multifunktionale Amine darstellen, die keine oder nur gering flüchtige organische Verbindungen (VOC) aufweisen, gemessen nach der EPA-Testmethode 24.

Die WO 2006/110961 A2 stellt auf ein korrosionshemmendes Material ab, das aus einer chemischen Reaktion einer Mannich-Base mit mindestens einem Reaktanten resultiert, wobei die Mannich-Base von hydroxyaromatischen Verbindungen, sekundären Aminen oder cyclischen sekundären Aminen und Aldehyden abgeleitet ist und der Reaktant einer der folgenden ist: - metallorganische Verbindungen, - Metalloxide, - Carbonsäuren, anorganische Säuren, anorganische Säurederivate, Alkylhalogenide, -Organosilane, -quartäre Ammoniumderivate und Metallderivate. Die so zur Verfügung gestellten Mannich-Basen sollen korrosionshemmend sein und zum Schutz von Metalloberflächen vor Korrosionsangriffen entweder in der Dampfphase oder in wässrigen Flüssigkeiten dienen.

Die WO 2006/056644 A1 stellt auf einen Satz kompatibler Wasserlackkomponenten zum Bilden eines Wasserlacks am Verkaufspunkt, Vertriebspunkt oder Auftragepunkt ab, wobei der Satz mindestens eine Bindemittellackkomponente enthält, die sich dadurch auszeichnet, dass der Satz ferner eine Verdickungsmittel-Farbkomponente und mindestens eine Spezialeffektlackkomponente, die im Wesentlichen aus 10 bis 50 Gew.-% eines Spezialeffektpigments, 1,0 bis 10 Gew.-% eines Pigmentsuspendiermittels, ausgewählt aus einem Verdickungsmittel und einem Antiabsetzmittel, und 40 bis 70 Gew.-% Wasser besteht. Solche Wasserlackkomponenten sollen eine Effektfarbe an einem Verkaufspunkt zur Verfügung stellen.

Die WO 01 57142 A2 stellt ab auf einen physikalisch, thermisch oder thermisch und mit aktinischer Strahlung härtbaren wässrigen Beschichtungsstoff, enthaltend A) mindestens ein gesättigtes, ungesättigtes und/oder mit olefinisch ungesättigten Verbindungen gepfropftes, ionisch und/oder nichtionisch stabilisiertes Polyurethan als Bindemittel, B) mindestens ein farb- und/oder effektgebendes Pigment und C) mindestens ein farbloses, gegenüber den übrigen Bestandteilen des Beschichtungsstoffs im Wesentlichen inertes, transparentes oder opakes Pulver mit einer mittleren Teilchengröße von 1,0 bis 10,0 µm, dessen Partikel eine Dichte von 0,8 bis 3,6 gcm-s aufweisen. Solche Beschichtungsstoffe sollen als Wasserbasislack oder als Unidecklack zur Herstellung ein- und mehrschichtiger farb- und/oder effektgebender Lackierungen, die eine verringerte Neigung zur Bildung von Wolken zeigen sollen, eingesetzt werden können.

Dispersionsfarben sind seit langem bekannt und werden sowohl im Innenbereich wie auch bei Fassaden eingesetzt. In beiden Fällen ist es ein stetes Bestreben, das Erscheinungsbild des ursprünglichen Anstrichs möglichst lange unverändert in hoher Qualität beizubehalten. Dies betrifft sowohl Maßnahmen gegen den Pilz- und Algenbefall als auch das Kriterium der Farbtonstabilität, beispielsweise gegenüber UV-Strahlung. Das Erreichen der hohen Anforderungen, die an Beschichtungen gestellt werden, wird seit einiger Zeit noch dadurch erschwert, dass man idealerweise ohne herkömmliche Konservierungsmittel auskommen soll bzw. auszukommen hat. Diese höheren Schutzanforderungen bringen mit sich, dass regelmäßig dafür Sorge zu tragen ist, dass auch im gesamten Produktionsprozess keine Konservierungsmittel eingesetzt werden. Die Anforderung, konservierungsmittelfrei zu arbeiten, gilt demgemäß in der Folge zunehmend auch für die Hersteller bzw. Zulieferer von Bestandteilen, die für die Formulierung von Beschichtungsstoffen verwendet werden. Auf diese Weise soll verhindert werden, dass Konservierungsmittel mittelbar in den Herstellprozess eines Beschichtungsstoffs eingeschleppt werden. Dies stellt im Allgemeinen sehr hohe Anforderungen an die mikroorganismenfreie bzw. -reduzierte Anlagenführung und das Anlagenmanagement, zumal man hierdurch mit völlig neuen Verfahrensaspekten konfrontiert wird, für die es bislang in der Farben- und Lackindustrie noch keine etablierten Handlungsanweisungen gibt.

Der vorliegenden Erfindung lag daher die Aufgabe zugrunde, Beschichtungsstoffe zur Verfügung zu stellen, die, insbesondere dauerhaft, einen sicheren Zugang, insbesondere auch im großtechnischen Maßstab, zu konservierungsmittelfreien Beschichtungsstoffen liefern.

Demgemäß wurde ein wässriger Beschichtungsstoff, insbesondere Dispersionsbeschichtungsstoff wie Dispersionsfarbe, gefunden, gebildet aus oder enthaltend
a) mindestens ein Bindemittel ausgewählt aus der Gruppe bestehend aus wässrigen (Meth)acrylat-Homopolymer/Siliciumdioxid-Hybrid-Dispersionen, wässrigen (Meth)acrylat-Copolymer/Siliciumdioxid-Hybrid-Dispersionen, wässrigen (Meth)acrylat/(Meth)acrylsäure-Copolymer/Siliciumdioxid-Hybrid-Dispersionen, wässrigen Organosilikat-Hybridbindemittel-Dispersionen, wässrigen Dispersionen enthaltend (Meth)acrylat-Homopolymere, wässrigen Dispersionen enthaltend (Meth)acrylat-Copolymere, wässrigen Dispersionen enthaltend Vinylacetat-Copolymere, insbesondere Vinylacetat/Ethylen-Copolymere, wässrigen Dispersionen enthaltend Vinylaromat/Acrylat-Copolymere, Acrylharzen, Acrylsilikonharzen, Silikonharzen, Urethanharzen, ungesättigten Polyesterharzen, Alkydharzen, insbesondere emulgierte Alkydharze, und deren beliebigen Mischungen,
b) mindestens einen Füllstoff, insbesondere einen silikatischen oder carbonatischen Füllstoff,
c) mindestens ein Rheologieadditiv, insbesondere Verdicker, und
d1) N, N, N', N'-Tetra-(hydroxyalkyl)hexamethylendiamin, besonders bevorzugt N, N, N', N'-Tetra-(2-hydroxypropyl)hexamethylendiamin,
d2) Alkalialkylsilantriolat, bevorzugt Kaliumalkylsilantriolat, besonders bevorzugt Kaliummethylsilantriolat, und
   N, N, N', N'-Tetra-(hydroxyalkyl)hexamethylendiamin, bevorzugt N, N, N', N'-Tetra-(2-hydroxypropyl)hexamethylendiamin, sowie
   gegebenenfalls mindestens einen Aminoalkohol, bevorzugt 2-Amino-2-ethyl-1,3-propandiol und/oder 2-Amino-2-methyl-1-propanol, besonders bevorzugt 2-Amino-2-ethyl-1,3-propandiol, und/oder Alkali- und/oder Erdalkalihydroxid, insbesondere Kalium- und/oder Natriumhydroxid
      und/oder
d3) mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, und
   N, N, N', N'-Tetra-(hydroxyalkyl)hexamethylendiamin, bevorzugt N, N, N', N'-Tetra-(2-hydroxypropyl)hexamethylendiamin,
   Alkalialkylsilantriolat, bevorzugt Kaliumalkylsilantriolat, besonders bevorzugt Kaliummethylsilantriolat,
   Alkylphosphonsäure, insbesondere Nitrilotrimethylphosphonsäure und/oder 1-Hydroxyethan-1,1-diphosphonsäure,
   Salzen der Alkylphosphonsäure,
   Estern der Alkylphosphonsäure
   und beliebigen Mischungen hiervon, und/oder
d4) Alkalialkylsilantriolat, bevorzugt Kaliumalkylsilantriolat, besonders bevorzugt Kaliummethylsilantriolat, und
   mindestens eine Alkylphosphonsäure, insbesondere Nitrilotrimethylphosphonsäure und/oder 1-Hydroxyethan-1,1-diphosphonsäure, und/oder deren Salze oder Ester und/oder
d5) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandia-mmonium-Salz und
   gegebenenfalls Alkalialkylsilantriolat, bevorzugt Kaliumalkylsilantriolat, besonders bevorzugt Kaliummethylsilantriolat, oder
   gegebenenfalls Alkalialkylsilantriolat, bevorzugt Kaliumalkylsilantriolat, besonders bevorzugt Kaliummethylsilantriolat, und mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, oder
   gegebenenfalls Alkalialkylsilantriolat, bevorzugt Kaliumalkylsilantriolat, besonders bevorzugt Kaliummethylsilantriolat, und Alkali- und/oder Erdalkalihydroxid, insbesondere Kalium- und/oder Natriumhydroxid, oder
   gegebenenfalls Alkalialkylsilantriolat, bevorzugt Kaliumalkylsilantriolat, besonders bevorzugt Kaliummethylsilantriolat, und mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, und Alkali- und/oder Erdalkalihydroxid, insbesondere Kalium- und/oder Natriumhydroxid.

Der Gehalt an Komponente d1) in dem erfindungsgemäßen wässrigen Beschichtungsstoff liegt in einer zweckmäßigen Ausführungsform im Bereich von 0,01 bis 1,0 Gewichtsprozent, bevorzugt im Bereich von 0,05 bis 0,5 Gewichtsprozent (Feststoffanteil), besonders bevorzugt im Bereich von 0,06 bis 0,3 Gewichtsprozent und ganz besonders bevorzugt im Bereich von 0,08 bis 0,2 Gewichtsprozent, jeweils bezogen auf das Gesamtgewicht des Beschichtungsstoffes. Bei Einhaltung der genannten Mengenbereiche wird die der Erfindung zugrundeliegende Aufgabe besonders zufriedenstellend und zuverlässig gelöst.

Der erfindungsgemäße wässrige Beschichtungsstoff, enthaltend die Komponenten a) bis c), kann alternativ zur Komponente d1) oder auch zusätzlich zur Komponente d1) die Komponente d2) enthalten, ausgewählt aus der Gruppe bestehend aus
d2) Alkalialkylsilantriolat, bevorzugt Kaliumalkylsilantriolat, besonders bevorzugt Kaliummethylsilantriolat, und
N, N, N', N'-Tetra-(hydroxyalkyl)hexamethylendiamin, bevorzugt N, N, N', N'-Tetra-(2-hydroxypropyl)hexamethylendiamin, sowie
gegebenenfalls mindestens einen Aminoalkohol, bevorzugt 2-Amino-2-ethyl-1,3-propandiol oder 2-Amino-2-methyl-1-propanol, besonders bevorzugt 2-Amino-2-ethyl-1,3-propandiol, und/oder, z.B. und,
Alkali- und/oder Erdalkalihydroxid, insbesondere Kalium- oder Natriumhydroxid.

Besonders gute Ergebnisse werden mit einer Komponente d2) als Bestandteil des erfindungsgemäßen wässrigen Beschichtungsstoffs erzielt, enthaltend oder bestehend aus, insbesondere enthaltend, d2a) Alkalialkylsilantriolat, bevorzugt Kaliumalkylsilantriolat, besonders bevorzugt Kaliummethylsilantriolat, N, N, N', N'-Tetra-(hydroxyalkyl)hexamethylendiamin, bevorzugt N, N, N', N'-Tetra-(2-hydroxypropyl)hexamethylendiamin, und mindestens einen Aminoalkohol, bevorzugt 2-Amino-2-ethyl-1,3-propandiol oder 2-Amino-2-methyl-1-propanol, besonders bevorzugt 2-Amino-2-ethyl-1,3-propandiol, oder d2b) Alkalialkylsilantriolat, bevorzugt Kaliumalkylsilantriolat, besonders bevorzugt Kaliummethylsilantriolat, N, N, N', N'-Tetra-(hydroxyalkyl)hexamethylendiamin, bevorzugt N, N, N', N'-Tetra-(2-hydroxypropyl)hexamethylendiamin, und mindestens ein Alkali- und/oder Erdalkalihydroxid, insbesondere Kalium- oder Natriumhydroxid. Ganz besonders bevorzugt sind erfindungsgemäße wässrige Beschichtungsstoffs, enthaltend als Komponente d2) die Ausführungsform d2a), enthaltend oder insbesondere bestehend aus Kaliummethylsilantriolat, N, N, N', N'-Tetra-(2-hydroxypropyl)hexamethylendiamin und 2-Amino-2-ethyl-1,3-propandiol oder 2-Amino-2-methyl-1-propanol, oder die Ausführungsform d2b), enthaltend oder insbesondere bestehend aus Kaliummethylsilantriolat, N, N, N', N'-Tetra-(2-hydroxypropyl)hexamethylendiamin und Kalium- oder Natriumhydroxid.

Kaliummethylsilantriolat ist dem Fachmann auch als Kaliummethylsilikonat (CAS Nr. 31795-24-1) bekannt.

Der Gehalt an Komponente d2) in dem erfindungsgemäßen wässrigen Beschichtungsstoff liegt in einer zweckmäßigen Ausführungsform im Bereich von 0,1 bis 1,0 Gewichtsprozent (Feststoffanteil), bevorzugt im Bereich von 0,1 bis 0,7 Gewichtsprozent und besonders bevorzugt im Bereich von 0,2 bis 0,5 Gewichtsprozent, jeweils bezogen auf das Gesamtgewicht des Beschichtungsstoffes.
Ferner kann der erfindungsgemäße wässrige Beschichtungsstoff, enthaltend die Komponenten a) bis c), alternativ zur Komponente d1) oder d2) oder auch zusätzlich zur Komponente d1) oder d2) die Komponente d3) enthalten, wobei die Komponente d3) mindestens einen Aminoalkohol, bevorzugt 2-Amino-2-ethyl-1,3-propandiol oder 2-Amino-2-methyl-1-propanol sowie gegebenenfalls 2-Amino-1-butanol, besonders bevorzugt 2-Amino-2-ethyl-1,3-propandiol, und N, N, N', N'-Tetra-(hydroxyalkyl)hexamethylendiamin, bevorzugt N, N, N', N'-Tetra-(2-hydroxypropyl)hexamethylendiamin,
Alkalialkylsilantriolat, bevorzugt Kaliumalkylsilantriolat, besonders bevorzugt Kaliummethylsilantriolat,
Alkylphosphonsäure, insbesondere Nitrilotrimethylphosphonsäure oder 1-Hydroxyethan-1,1-diphosphonsäure, Salzen der Alkylphosphonsäure, Estern der Alkylphosphonsäure,
und beliebige Mischungen hiervon umfasst oder hieraus besteht.

Hierbei kann die Komponente d3) in bevorzugten Ausführungsformen auf den folgenden Kombinationen, welche sämtlich als erste Komponente einen Aminoalkohol, insbesondere 2-Amino-2-ethyl-1,3-propandiol oder 2-Amino-2-methyl-1-propanol, besonders bevorzugt 2-Amino-2-ethyl-1,3-propandiol, enthalten, basieren:
d3g) 2-Amino-2-ethyl-1,3-propandiol,
N, N, N', N'-Tetra-(hydroxyalkyl)hexamethylendiamin,bevorzugt N, N, N', N'-Tetra-(2-hydroxypropyl)hexamethylendiamin,
Nitrilotrimethylphosphonsäure oder 1-Hydroxyethan-1,1-diphosphonsäure, oder deren Salze oder Ester und
Kaliummethylsilantriolat.

Selbstverständlich können auch beliebige Kombinationen der Ausführungsformn d3g) zum Einsatz kommen.

Besonders bevorzugte Mischungen d3g) stellen sich wie folgt dar:
d3g) 2-Amino-2-ethyl-1,3-propandiol,
N, N, N', N'-Tetra-(2-hydroxypropyl)hexametliylendiamin und
Nitrilotrimethylphosphonsäure oder 1-Hydroxyethan-1,1-diphosphonsäure, oder deren Salze oder Ester und Kaliummethylsilantriolat.

In einer besonders geeigneten Ausführungsform setzt man als Komponente d3) eine Mischung ein, enthaltend, insbesondere bestehend aus, einem Aminoalkohol, bevorzugt 2-Amino-2-ethyl-1,3-prapandiol, N, N, N', N'-Tetra-(2-hydroxypropyl)hexamethylendiamin, Kaliummethylsilantriolat, und Nitrilotrimethylphosphonsäure und/oder 1-Hydroxyethan-1,1-diphosphonsäure, oder Salze oder Ester hiervon. In einer besonders bevorzugten Ausführungsform wird als Komponente d3) zurückgegriffen auf mindestens einen Aminoalkohol, insbesondere 2-Amino-2-ethyl-1,3-propandiol, und Kaliummethylsilantriolat.

Der Gehalt an Komponente d3) in dem erfindungsgemäßen wässrigen Beschichtungsstoff liegt in einer zweckmäßigen Ausführungsform im Bereich von 0,05 bis 1,5 Gewichtsprozent (Wirkstoff- bzw. Feststoffanteil), bevorzugt im Bereich von 0,1 bis 1 % Gewichtsprozent und besonders bevorzugt im Bereich von 0,2 bis o,8 Gewichtsprozent, jeweils bezogen auf das Gesamtgewicht des Beschichtungsstoffes.

Ferner kann der erfindungsgemäße wässrige Beschichtungsstoff, enthaltend die Komponenten a) bis c), alternativ zur Komponente d1), d2) oder d3) oder auch zusätzlich zur Komponente d1), d2) oder d3) die Komponente d4) enthalten, wobei die Komponente d4) Alkalialkylsilantriolat, bevorzugt Kaliumalkylsilantriolat, besonders bevorzugt Kaliummethylsilantriolat, und mindestens eine Alkylphosphonsäure, insbesondere Nitrilotrimethylphosphonsäure oder 1-Hydroxyethan-1,1-diphosphonsäure, oder deren Salze oder Ester umfasst oder hieraus besteht.

Der Gehalt an Komponente d4) in dem erfindungsgemäßen wässrigen Beschichtungsstoff liegt in einer zweckmäßigen Ausführungsform im Bereich von 0,1 bis 2,0 Gewichtsprozent (Feststoffanteil), bevorzugt im Bereich von 0,2 bis 1,8 Gewichtsprozent und besonders bevorzugt im Bereich von 0,3 bis 1,2 Gewichtsprozent, jeweils bezogen auf das Gesamtgewicht des Beschichtungsstoffes.

Schließlich kann der erfindungsgemäße wässrige Beschichtungsstoff, enthaltend die Komponenten a) bis c), alternativ zur Komponente d1), d2), d3) oder d4) oder auch zusätzlich zur Komponente d1), d2), d3) oder d4) die Komponente d5) enthalten, wobei die Komponente d5) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandiam-monium-Salz umfasst oder hieraus besteht. In bevorzugten Ausführungsformen kann vorgesehen sein, dass die Komponente d5) zusätzlich, insbesondere zusätzlich zu dem N, N'-bis-(2-hydroxypropyl)-N,N,N',N'-tetramethyl-1,6-hexandiammonium-Salz, ferner mindestens eine Verbindung umfasst, ausgewählt aus der Gruppe bestehend aus Alkalialkylsilantriolat, bevorzugt Kaliumalkylsilantriolat, besonders bevorzugt Kaliummethylsilantriolat; Aminoalkohol, bevorzugt 2-Amino-2-ethyl-1,3-propandiol oder 2-Amino-2-methyl-1-propanol sowie gegebenenfalls 2-Amino-1-butanol, besonders bevorzugt 2-Amino-2-ethyl-1,3-propandiol; Alkali- und/oder Erdalkalihydroxid, insbesondere Kalium- oder Natriumhydroxid; und Mischungen dieser Komponenten.

Besonders geeignete Mischungen der Komponente d5) umfassen
d5a) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandia-mmonium-Salz sowie
   mindestens ein Alkalialkylsilantriolat, bevorzugt Kaliumalkylsilantriolat, besonders bevorzugt Kaliummethylsilantriolat, oder
d5b) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandia-mmonium-Salz, sowie
   mindestens ein Alkalialkylsilantriolat, bevorzugt Kaliumalkylsilantriolat, besonders bevorzugt Kaliummethylsilantriolat, und
   mindestens einen Aminoalkohol, bevorzugt 2-Amino-2-ethyl-1,3-propandiol oder 2-Amino-2-methyl-1-propanol sowie gegebenenfalls 2-Amino-1-butanol, besonders bevorzugt 2-Amino-2-ethyl-1,3-propandiol, oder
d5c) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandia-mmonium-Salz, sowie
   mindestens ein Alkalialkylsilantriolat, bevorzugt Kaliumalkylsilantriolat, besonders bevorzugt Kaliummethylsilantriolat, und
   Alkali- und/oder Erdalkalihydroxid, insbesondere Kalium- oder Natriumhydroxid, oder
d5d) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandia-mmonium-Salz,
   mindestens ein Alkalialkylsilantriolat, bevorzugt Kaliumalkylsilantriolat, besonders bevorzugt Kaliummethylsilantriolat,
   mindestens einen Aminoalkohol, bevorzugt 2-Amino-2-ethyl-1,3-propandiol oder 2-Amino-2-methyl-1-propanol sowie gegebenenfalls 2-Amino-1-butanol, besonders bevorzugt 2-Amino-2-ethyl-1,3-propandiol, und
   Alkali- und/oder Erdalkalihydroxid, insbesondere Kalium- oder Natriumhydroxid.

Besonders bevorzugt sind hierbei die Ausführungsvarianten:
d5a) mindestens ein N, N'-bis-(2-Hydroxypropyl)-N,N,N',N'-tetramethyl-1,6-hexandiammonium-Salz und Kaliummethylsilantriolat, oder
d5b) mindestens ein N, N'-bis-(2-Hydroxypropyl)-N,N,N',N'-tetramethyl-1,6-hexandiammonium-Salz, Kaliummethylsilantriolat und 2-Amino-2-ethyl-1,3-propandiol, oder
d5c) mindestens ein N, N'-bis-(2-Hydroxypropyl)-N,N,N',N'-tetramethyl-1,6-hexandiammonium-Salz, Kaliummethylsilantriolat und Kalium- oder Natriumhydroxid, oder
d5d) mindestens ein N, N'-bis-(2-Hydroxypropyl)-N,N,N',N'-tetramethyl-1,6-hexandiammonium-Salz, Kaliummethylsilantriolat, 2-Amino-2-ethyl-1,3-propandiol, und Kalium- oder Natriumhydroxid.

Unter den Ausführungsformen der Komponente d5) ist die kombinierte Verwendung von mindestens einem Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandiammonium-Salz, und Alkalialkylsilantriolat, bevorzugt Kaliumalkylsilantriolat, besonders bevorzugt Kaliummethylsilantriolat, ganz besonders bevorzugt.

Der Gehalt an Komponente d5) in dem erfindungsgemäßen wässrigen Beschichtungsstoff liegt in einer zweckmäßigen Ausführungsform im Bereich von 0,01 bis 1,0 Gewichtsprozent (Feststoffanteil), bevorzugt im Bereich von 0,05 bis 0,5 Gewichtsprozent und besonders bevorzugt im Bereich von 0,05 bis 0,2 Gewichtsprozent, jeweils bezogen auf das Gesamtgewicht des Beschichtungsstoffes.

Sofern die Verbindung, für die der Gewichtsanteil zu bestimmen ist, bei Raumtemperatur (20 °C) nicht im festen, sondern im flüssigen Zustand vorliegt, kann dies auch statt mit "Feststoffanteil" mit dem Begriff "Wirkstoffanteil" im Sinne der vorliegenden Erfindung bezeichnet werden. Grundsätzlich soll mit dem Begriff "Feststoffanteil" im Sinne der Erfindung, sofern die Verbindung bei Raumtemperatur flüssig vorliegt und falls nicht ausdrücklich von Wirkstoffanteil gesprochen wird, auch dieser Wirkstoffanteil gemeint sein.

Unter den vorangehend genannten erfindungsgemäßen Ausführungsformen d1) und d3) wässriger Beschichtungsstoffe sind auch solche Beschichtungsstoffe geeignet, die im Wesentlichen frei, insbesondere frei, sind von Kaliummethylsilantriolat, bevorzugt von Kaliumalkylsilantriolat und besonders bevorzugt von Alkalialkylsilantriolat.

Bei dem erfindungsgemäßen wässrigen Beschichtungsstoff handelt es sich insbesondere um eine Dispersionsinnenfarbe, eine Dispersionsaußenfarbe, eine Spachtelmasse, eine Grundierungsmasse, eine Putzmasse, einen Lack, eine Lasur, einen Bautenkleber, Armierungsmasse oder eine Farbpaste, wobei diese wässrigen Beschichtungsstoffe in einer Ausführungsvariante bevorzugt Dispersionsinnenfarben und Dispersionsaußenfarben darstellen

Als Bindemittel kommen in einer geeigneten Ausführungsform wässrige (Meth)acrylat-Homopolymer/Siliciumdioxid-Hybrid-Dispersionen, wässrige (Meth)acrylat-Copolymer/Siliciumdioxid-Hybrid-Dispersionen, wässrige (Meth)acrylat/(Meth)acrylsäureCopolymer/Siliciumdioxid-Hybrid-Dispersionen oder wässrige Organosilikat-Hybridbindemittel-Dispersionen zum Einsatz. In den wässrigen (Meth)acrylat-Homopolymer/Siliciumdioxid-, (Meth)acrylat-Copolymer/Siliciumdioxid- oder (Meth)acrylat/(Meth)acrylsäure-Copolymer/Siliciumdioxid-Hybrid-Dispersionen liegen die (Meth)acrylat-Homopolymer/Siliciumdioxid-, (Meth)acrylat-Copolymer/Siliciumdioxid- bzw. (Meth)acrylat/(Meth)acrylsäure-Copolymer/Siliciumdioxid-Hybrid-Partikel vorzugsweise mit einer durchschnittlichen, insbesondere einer absoluten, Partikelgröße kleiner 1 µm vor.

Unter den vorangehend genannten Hybridbindemitteln, insbesondere den Organosilikat-Hybridbindemitteln, sollen im Sinne der vorliegenden Erfindung insbesondere auch solche Reaktionsprodukte verstanden werden, gebildet aus mindestens einem organischen Bindemittel, ausgewählt aus der Gruppe bestehend aus Vinylacetat/Ethylen-Copolymeren, Copolymeren auf Basis von Vinylaromaten, insbesondere Styrol, und Acrylaten, Copolymeren auf Basis von Reinacrylaten und deren beliebigen Mischungen, das in die Polymere oder Copolymere einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, oder b) mindestens ein Monomer mit mindestens einer Hydroxygruppe als funktioneller Gruppe, wobei diese funktionelle Gruppe nicht kettenverlängernd an der Polymerisationsreaktion teilnimmt, enthält, und Kieselsol und/oder Wasserglas, insbesondere Wasserglas.

Ohne an eine Theorie gebunden zu sein, wird vermutet, dass die hydrolysierbare Silangruppe a) oder die Hydroxygruppe b) eine Kondensationsreaktion mit den funktionellen Gruppen des Kieselsols oder Wasserglases eingehen.

Geeignete Vinylacetat-Copolymere umfassen insbesondere Vinylacetat/Acrylat-Copolymere, Vinylacetat/Ethylen-Copolymere, Vinylacetat/Versatat-Copolymere, Vinylacetat/Ethylen/Acrylat-Copolymere, Vinylacetat/Vinylchlorid-Ethylen-Copolymere, Vinylacetat/Vinylchlorid/Ethylen/Acrylat-Copolymere, Vinylacetat/Maleinsäureester-Copolymere, insbesondere Vinylacetat/Maleinsäuredi-*n*-butylester, oder Vinylacetat-Versatat-Copolymere sowie beliebige Mischungen der vorangehend genannten Copolymere.

Unter den Vinylaromat/Acrylat-Copolymeren wird bevorzugt auf Styrol/Acrylat-Copolymere zurückgegriffen.

Wässrige Bindemitteldispersionen auf Basis von Reinacrylaten im Sinne der Erfindung umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein.

Bei den Alkydharz-Bindemitteln im Sinne der Erfindung handelt es sich regelmäßig um einen Polyester auf der Basis ungesättigter und gegebenenfalls gesättigter Fettsäuren, wobei als kettenbildende Elemente Polyole, insbesondere Glycerin, und Phthalsäureanhydrid zum Einsatz kommen können. Die die Alkydharze bildenden Komponenten umfassen demgemäß mehrwertige Alkohole, insbesondere Glycerin, mehrprotonige Säuren, insbesondere Phthalsäure, Phthalsäureanhydrid und/oder Isophthalsäure, und ungesättigte Fettsäuren sowie gegebenenfalls auch gesättigte Fettsäuren. Als Quelle für ungesättigte Fettsäuren für die erfindungsgemäßen wässrigen Beschichtungsstoffe kann z.B. auf auf Kokosöl, Palmkernöl, Palmöl, Ricinusöl, Erdnussöl, Cottonöl, Sojaöl, Sonnenblumenöl, Palmöl, Leindotteröl und/oder Leinöl zurückgegriffen werden.

Die Komponente a) (Feststoffanteil) liegt in den erfindungsgemäßen wässrigen Beschichtungsstoffen zweckmäßigerweise in Mengen im Bereich von 0,1 bis 15 Gew.-%, vorzugsweise 0,5 bis 8 Gew.-% und besonders bevorzugt 1 bis 5 Gew.-% vor.

Für den silikatischen Füllstoff greift man bevorzugt auf solche zurück, die ausgewählt sind aus der Gruppe bestehend aus Glimmer, insbesondere Muskovitglimmer, Feldspate, Talk, Wollastonit, Kaolin, insbesondere kalzinierte Feldspate, Kaolin oder Feldspaten. Hierunter sind Albit als Feldspat und Muskovit als Glimmer sowie Kaolin besonders bevorzugt. Silikatische Füllstoffe im Sinne der vorliegenden Erfindung umfassen ebenfalls - alternativ sowie insbesondere zusätzlich - silikatische Leichtfüllstoffe. Unter diesen sind Perlite besonders bevorzugt.

Die Füllstoffe, insbesondere silikatischen Füllstoffe, können in monomodaler oder auch multimodaler, z.B. bimodaler Verteilung, in den erfindungsgemäßen wässrigen Beschichtungsstoffen vorliegen. Hierbei kann eine mindestens bimodale Partikelgrößenverteilung sowohl durch Kombination von mindestens zwei silikatischen Füllstoffen mit jeweils monomodaler Korngrößenverteilung mit unterschiedlichen lokalen Maxima als auch durch den Einsatz mindestens eines silikatischen Füllstoffs mit bimodaler oder multimodaler Korngrößenverteilung erreicht werden. Multimodale Korngrößenverteilungen umfassen nicht nur bi- und trimodale Korngrößenverteilungen, sondern auch höhermodale Korngrößenverteilungen.

Für die nicht-silikatischen Füllstoffe b) kann z.B. auf calcitische Füllstoffe wie Calciumcarbonate, Dolomite, Calcite oder Aragonite, auf sulfatische Füllstoffe, insbesondere Bariumsulfat, oder chemisch modifizierte Füllstoffe zurückgegriffen werden.

Ganz besonders geeignete Füllstoffe für die erfindungsgemäßen wässrigen Beschichtungsstoffe sind ausgewählt aus der Gruppe bestehend aus Calciumsilikathydraten, insbesondere Tobermorit, Alumino-Hydroxokomplexen, insbesondere MₓAl(OH)_{y} mit M = Na, K und 1 > x < 3 und 4 > y < 6, wasserhaltigen Sulfaten, insbesondere Ettringit, und beliebigen Mischungen hiervon.

Die Komponente b) liegt in den erfindungsgemäßen wässrigen Dispersionsbeschichtungsstoffen zweckmäßigerweise in Mengen im Bereich von 5 bis 40 Gew.-%, vorzugsweise 10 bis 38 Gew.-% und besonders bevorzugt 15 bis 35 Gew.-% vor.

Unter den geeigneten Verdickern (Komponente c)) wird vorzugsweise zurückgegriffen auf solche Verdicker ausgewählt aus der Gruppe bestehend aus Polyacrylat-Verdickern, insbesondere HASE-Polyacrylat-Verdickern, Polyurethan-Verdickern, Polyharnstoff-Verdickern, modifizierten Polyharnstoff-Verdickern, Polysaccharid-Verdickern, Polyvinylalkohol-Verdickern, Polyetherpolyol-Verdickern, Schichtsilikat-Verdickern, insbesondere organisch modifizierten Schichtsilikaten, und beliebigen Mischungen hiervon. Beispielsweise kann unter den Mischungen auf solche zurückgegriffen werden, die Polyurethan- und Polysaccharid-Verdicker, insbesondere Cellulose-Verdicker, enthalten.

Unter den geeigneten Polysaccharid-Verdickern wird vorzugsweise zurückgegriffen auf Xanthan oder einen Cellulose-Verdicker, insbesondere auf Basis von Hydroxyethylcellulose, hydrophob modifizierter Hydroxyethylcellulose, Methylhydroxyethylcellulose und/oder Methylcellulose. Selbstverständlich können auch beliebige Mischungen dieser Verdicker eingesetzt werden.

Die Komponente c) liegt in den erfindungsgemäßen wässrigen Beschichtungsstoffen zweckmäßigerweise in Mengen im Bereich von 0,01 bis 5,0 Gew.-%, vorzugsweise 0,05 bis 4,0 Gew.-% und besonders bevorzugt 0,1 bis 2,0 Gew.-% vor.

In einer besonders zweckmäßigen Ausführungsform kann der erfindungsgemäße wässrige Beschichtungsstoff ferner
e) mindestens ein pH-Wert-Einstellmittel und/oder, insbesondere und,
f) mindestens ein Netz- und/oder Dispergiermittel enthalten.

Geeignete Additive können ausgewählt werden aus der Gruppe bestehend aus Entschäumern, pH-Stabilisatoren, Flammschutzmitteln, Mattierungsmitteln, Schichtsilikaten, UV-Schutzmitteln, Offenzeitverlängerer und Mischungen hiervon.

Ferner kann der erfindungsgemäße wässrige Beschichtungsstoff alternativ oder zusätzlich zu den vorangehend genannten Bestandteilen mindestens ein Hydrophobierungsmittel enthalten. Außerdem kann der erfindungsgemäße wässrige Beschichtungsstoff alternativ oder zusätzlich zu den vorangehend genannten Bestandteilen Pigmente, insbesondere in Form einer Pigmentpaste, enthalten. Schließlich kann der erfindungsgemäße wässrige Beschichtungsstoff alternativ oder zusätzlich zu den vorangehend genannten Bestandteilen Oberflächenadditive, insbesondere Silikonoberflächenadditive, beispielsweise polyethermodifizierte Siloxane, wie polyethermodifiziertes Polymethylalkylsiloxan, oder Silikonpolyether-Copolymere enthalten.

Das Hydrophobierungsmittel umfasst vorzugsweise mit Aminoalkylgruppen derivatisierte Polydialkylsiloxane. Es liegt in den erfindungsgemäßen wässrigen Dispersionsbeschichtungsstoffen zweckmäßigerweise in Mengen im Bereich von 0 bis 2,5 Gew.-%, vorzugsweise 0,1 bis 2 Gew.-% und besonders bevorzugt 0,3 bis 1,5 Gew.-% vor.

Das mindestens eine Netz- und/oder Dispergiermittel f) wird vorzugsweise ausgewählt aus der Gruppe bestehend aus Polycarboxylaten, insbesondere Salze von Polyacrylsäuren wie Natrium-, Kalium- oder Ammoniumpolyacrylate, Polyphosphaten, insbesondere lineare Polyphosphate oder zyklische Metaphosphate, Polyetherphosphaten, Polycarbonsäurepolymeren, Acrylblockcopolymeren, insbesondere CFRP-basierte Acrylblockcopolymere, EO/PO-Blockcopolymeren, vorzugsweise Ethylendiamin-EO/PO-Blockcopolymere, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxan, Alkindiolethoxylaten, Fluortensiden und beliebigen Mischungen hiervon.

Besonders geeignete Netz- und/oder Dispergiermittel stellen EO/PO-Blockcopolymere, vorzugsweise Ethylendiamin-EO/PO-Blockcopolymere, dar.

Die Komponente f) liegt in den erfindungsgemäßen wässrigen Dispersionsbeschichtungsstoffen zweckmäßigerweise in Mengen im Bereich von 0 bis 2,0 Gew.-%, vorzugsweise 0,05 bis 1,5 Gew.-% und besonders bevorzugt 0,1 bis 1 Gew.-% vor.

Unter den Pigmenten sind solche bevorzugt, die ausgewählt sind aus der Gruppe bestehend aus Titandioxid, Zinksulfid, Zinkoxid, Baryt, Ruß, Eisenoxid, Chromoxid, Kobaltblau, Phtalocyaninpigmenten, Spinellpigmenten, Nickel- und Chromtitanat, synthetischen Weißpigmenten mit Lufteinschlüssen sowie einer beliebigen Mischung hiervon.

Grundsätzlich kommen als geeignete Pigmente anorganische Pigmente wie Bunt-, Schwarz- und Weißpigmente (Farbpigmente) sowie Glanzpigmente und organische Pigmente wie Bunt- und Schwarzpigmente in Betracht. Pigmente im Sinne der vorliegenden Erfindung umfassen ebenfalls Opazifizierungsmittel, z.B. das kommerzielle Produkt Ropaque^{®} der The Dow Chemical Company.

Unter den anorganischen Schwarzpigmenten kann zum Beispiel ausgewählt werden unter Eisenoxidschwarz, Eisen-Mangan-Schwarz, Spinellschwarz oder Ruß.

Unter den anorganischen Buntpigmenten kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb oder Bismutvanadat. Zweckmäßige Pigmente umfassen demgemäß zum Beispiel Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Besonders geeignete anorganische Buntpigmente umfassen z.B. C.I. Pigment Blue 28, C.I. Pigment Blue 29, C.I. Pigment Blue 36, C.I. Pigment Black 7, C.I. Pigment Black 11, C.I. Pigment Black 22, C.I. Pigment Black 26, C.I. Pigment Black 28, C.I. Pigment Black 30, C.I. Pigment Black 33, C.I. Pigment Brown 24, C.I. Pigment Brown 29, C.I. Pigment Brown 33, C.I. Pigment Brown 35, C.I. Pigment Green 17, C.I. Pigment Green 26, C.I. Pigment Green 50, C.I. Pigment Orange 82, C.I. Pigment Red 101, C.I. Pigment Violet 14, C.I. Pigment Violet 15, C.I. Pigment Violet 16, C.I. Pigment Violet 48, C.I. Pigment Red 259, C.I. Pigment Yellow 42, C.I. Pigment Yellow 53, C.I. Pigment Yellow 119, C.I. Pigment Yellow 159, C.I. Pigment Yellow 161, C.I. Pigment Yellow 162, C.I. Pigment Yellow 163, C.I. Pigment Yellow 164, C.I. Pigment Yellow 184, C.I. Pigment Yellow 216, C.I. Pigment Yellow 227 oder beliebige Mischungen dieser Pigmente.

Geeignete organische Buntpigmente umfassen z.B. C.I. Pigment Black 31, C.I. Pigment Black 32, C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, C.I Pigment Blue 16, C.I Pigment Blue 60, C.I. Pigment Brown 25, C.I Pigment Blue 80, C.I. Pigment Green 7, C.I. Pigment Green 36, C.I. Pigment Orange 34, C.I. Pigment Orange 36, C.I. Pigment Orange 43, C.I. Pigment Orange 62, C.I. Pigment Orange 73, C.I. Pigment Orange 74, C.I. Pigment Red 19, C.I. Pigment Red 112, C.I. Pigment Red 122, C.I. Pigment Red 168, C.I. Pigment Red 170, C.I. Pigment Red 177, C.I. Pigment Red 179, C.I. Pigment Red 187, C.I. Pigment Red 188, C.I. Pigment Red 202, C.I. Pigment Red 207, C.I. Pigment Red 214, C.I. Pigment Red 254, C.I. Pigment Red 255, C.I. Pigment Red 257, C.I. Pigment Red 264, C.I. Pigment Red 282, C.I. Pigment Violett 19, C.I. Pigment Violett 23, C.I. Pigment Violett 29, Pigment Yellow 3, Pigment Yellow 65, Pigment Yellow 74, Pigment Yellow 83, Pigment Yellow 97, C.I. Pigment Yellow 109, C.I. Pigment Yellow 110, C.I. Pigment Yellow 120, C.I. Pigment Yellow 138, C.I. Pigment Yellow 139, C.I. Pigment Yellow 151, C.I. Pigment Yellow 154, C.I. Pigment Yellow 155, C.I. Pigment Yellow 175, C.I. Pigment Yellow 194, C.I. Pigment Yellow 213, C.I. Pigment Yellow 219 oder beliebige Mischungen dieser Pigmente.

Unter den Oberflächenadditiven wird bevorzugt zurückgegriffen auf Silikonoberflächenadditive, beispielsweise polyethermodifizierte Siloxane, wie polyethermodifiziertes Polymethylalkylsiloxan, oder Silikonpolyether-Copolymere.

Die Oberflächenadditive liegen in den erfindungsgemäßen wässrigen Beschichtungsstoffen, insbesondere Dispersionsbeschichtungsstoffen, zweckmäßigerweise in Mengen im Bereich von o bis 8 Gew.-%, vorzugsweise 0,05 bis 6 Gew.-% und besonders bevorzugt 0,5 bis 4 Gew.-%, bezogen auf das Gesamtgewicht des Beschichtungsstoffs, vor.

Der wässrige Beschichtungsstoff kann in einigen Ausführungsformen im Wesentlichen frei, insbesondere frei, von Wasserglas oder Kieselsol, insbesondere von Wasserglas und Kieselsol, sein.

Die erfindungsgemäßen wässrigen Beschichtungsstoffe eignen sich insbesondere für die Herstellung von oder als Dispersionsinnenfarbe, Dispersionsaußenfarbe, Spachtelmasse, Lacke, Lasur, Bautenkleber, Armierungsmasse, Grundierungsmasse, Putzmasse oder Farbpaste.

Mit den erfindungsgemäßen wässrigen Beschichtungsstoffen lässt sich eine Verstärkung der Resistenz gegen Bakterien- und/oder Pilzbefall während der Produktion und Lagerung erhalten.

Die erfindungsgemäßen wässrigen Beschichtungsstoffe, insbesondere Dispersionsbeschichtungsstoffe, z.B. Dispersionsfarben, sind vorzugsweise im Wesentlichen frei von, insbesondere frei von, Topfkonservierungsmitteln, vorzugsweise frei von Topf- und Filmkonservierungsmitteln, und besonders bevorzugt im Wesentlichen sowie insbesondere frei von Konservierungsmitteln. Die erfindungsgemäßen Beschichtungsstoffe, insbesondere Dispersionsbeschichtungsstoffe, sind insbesondere dann als im Wesentlichen frei an organischen Bioziden bzw. organischen Konservierungsmitteln zu betrachten, wenn nach Maßgabe der "Vergabegrundlage für Umweltzeichen" der RAL gGmbH für "Emissionsarme Innen-wandfarben DE-UZ 102" (Ausg. Januar 2019, Version 3) keine organischen Biozide oder organischen Konservierungsmittel darin enthalten sind oder, jeweils bezogen auf das individuelle Konservierungsmittel, nicht mehr als 2 ppm (einschließlich Formaldehyd) und in Bezug auf 5-Chloro-2-methyl-4-isothiazolin (CIT) weniger als 0,5 ppm sowie in Bezug auf Methylisothiazolinon (MIT) weniger als 1,5 ppm.

Erfindungsgemäße wässrige Beschichtungsstoffe, die im Wesentlichen frei, insbesondere frei, von Konservierungsmitteln sind, verfügen bevorzugt über einen pH-Wert im Bereich von 9,5 bis 12,0, insbesondere im Bereich von 10,5 bis 12,0, z.B. 11,0 bis 11,5, oder werden auf einen pH-Wert im Bereich von 9,5 bis 12,0, insbesondere im Bereich von 10,5 bis 12,0, z.B. 11,0 bis 11,5, eingestellt.

Geeignete Kandidaten als pH-Wert-Einstellmittel e) umfassen Alkalihydroxide, Erdalkalihydroxide, Ammoniak, Amine, Wasserglas und beliebige Mischungen der vorangehend genannten Komponenten. Alternativ oder zusätzlich kann für die Einstellung des pH-Wertes auch auf Alkylalkoxysilane, Alkylalkoxysiloxane, Monoalkylsilantriol, Dialkylsilandiol, Trialkylsilanol, Alkalisalze von Monoalkylsilantriol, insbesondere Kaliummethylsilantriolat oder Kaliumethylsilantriolat, Dialkylsilandiol oder Trialkylsilanol zurückgegriffen werden. Bevorzugt wird zur pH-Wert-Einstellung in einer Ausführungsform auf Alkalihydroxide, die Alkalisalze von Monoalkylsilantriol, insbesondere Kaliummethylsilantriolat, und gegebenenfalls Wasserglas zurückgegriffen, wobei Kalium- oder Natriumhydroxid, insbesondere Kaliumhydroxid, besonders bevorzugt ist. Die Komponente e) liegt in den erfindungsgemäßen wässrigen Dispersionsbeschichtungsstoffen in einigen geeigneten Ausführungsformen in Mengen im Bereich von o bis 1,0 Gew.-%, vorzugsweise 0,05 bis 0,75 Gew.-% und besonders bevorzugt 0,1 bis o,6 Gew.-% vor.

Daneben umfassen erfindungsgemäße wässrige Beschichtungsstoffe auch solche Ausführungsformen, die einen pH-Wert im Bereich von 7,0 bis kleiner 9,5, insbesondere im Bereich von 8,0 bis kleiner 9,5, z.B. von 8,0 bis 9,0, aufweisen oder die auf einen pH-Wert im Bereich von 7,0 bis kleiner 9,5, insbesondere im Bereich von 8,0 bis kleiner 9,5, z.B. von 8,0 bis 9,0, eingestellt sind. In einer geeigneten Ausführungsvariante sind diese erfindungsgemäßen wässrigen Beschichtungsstoffe mit einem Konservierungsmittel ausgestattet. In einer bevorzugten Ausführungsvariante verfügen auch diese erfindungsgemäßen wässrigen Beschichtungsstoffe mit dem pH-Wert im Bereich von 7,0 bis kleiner 9,5 über im Wesentlichen keine, insbesondere keine, Topfkonservierungsmitteln, vorzugsweise im Wesentlichen keine, insbesondere keine, Topf- und Filmkonservierungsmitteln und sind besonders bevorzugt im Wesentlichen sowie insbesondere frei von Konservierungsmitteln.

Die der Erfindung zugrunde liegende Aufgabe wird ebenfalls gelöst durch eine Beschichtung, erhalten oder erhältlich mit dem erfindungsgemäßen wässrigen Beschichtungsstoff.

Mit den erfindungsgemäßen wässrigen Beschichtungsstoffen lassen sich vielfältige beschichtete Substrate erhalten. Insbesondere eignen sich die erfindungsgemäßen wässrigen Beschichtungsstoffe für die Beschichtung bzw. Renovierung von Gebäudefassaden.

Die der Erfindung zugrunde liegende Aufgabe wird ebenfalls gelöst durch die Verwendung von
d1) N, N, N', N'-Tetra-(hydroxyalkyl)hexamethylendiamin, bevorzugt N, N, N', N'-Tetra-(2-hydroxypropyl)hexamethylendiamin, oder
d2) Alkalialkylsilantriolat, bevorzugt Kaliumalkylsilantriolat, besonders bevorzugt Kaliummethylsilantriolat, und
   N, N, N', N'-Tetra-(hydroxyalkyl)hexamethylendiamin, bevorzugt N, N, N', N'-Tetra-(2-hydroxypropyl)hexamethylendiamin, sowie
   gegebenenfalls mindestens einen Aminoalkohol, bevorzugt 2-Amino-2-ethyl-1,3-propandiol oder 2-Amino-2-methyl-1-propanol, besonders bevorzugt 2-Amino-2-ethyl-1,3-propandiol, und/oder Alkali- und/oder Erdalkalihydroxid, insbesondere Kalium- oder Natriumhydroxid,
      oder
   d3) mindestens einen Aminoalkohol, bevorzugt 2-Amino-2-ethyl-1,3-propandiol oder 2-Amino-2-methyl-1-propanol sowie gegebenenfalls 2-Amino-1-butanol, besonders bevorzugt 2-Amino-2-ethyl-1,3-propandiol, und N, N, N', N'-Tetra-(hydroxyalkyl)hexamethylendiamin, bevorzugt N, N, N', N'-Tetra-(2-hydroxypropyl)hexamethylendiamin,
      Alkalialkylsilantriolat, bevorzugt Kaliumalkylsilantriolat, besonders bevorzugt Kaliummethylsilantriolat,
      Alkylphosphonsäure, insbesondere Nitrilotrimethylphosphonsäure oder 1-Hydroxyethan-1,1-diphosphonsäure, oder Salzen der Alkylphosphonsäure, oder Estern der Alkylphosphonsäure,
      und beliebige Mischungen hiervon, oder
d4) Alkalialkylsilantriolat, bevorzugt Kaliumalkylsilantriolat, besonders bevorzugt Kaliummethylsilantriolat, und mindestens eine
   Alkylphosphonsäure, insbesondere Nitrilotrimethylphosphonsäure oder 1-Hydroxyethan-1,1-diphosphonsäure, oder deren Salze oder Ester oder
d5) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandia-mmonium-Salz, und
   gegebenenfalls Alkalialkylsilantriolat, bevorzugt Kaliumalkylsilantriolat, besonders bevorzugt Kaliummethylsilantriolat, oder
   gegebenenfalls Alkalialkylsilantriolat, bevorzugt Kaliumalkylsilantriolat, besonders bevorzugt Kaliummethylsilantriolat, und mindestens einen Aminoalkohol, bevorzugt a-Amino-2-ethyl-1,3-propandiol oder 2-Amino-2-methyl-1-propanol sowie gegebenenfalls 2-Amino-1-butanol, besonders bevorzugt 2-Amino-2-ethyl-1,3-propandiol, oder
   gegebenenfalls Alkalialkylsilantriolat, bevorzugt Kaliumalkylsilantriolat, besonders bevorzugt Kaliummethylsilantriolat, und Alkali- und/oder Erdalkalihydroxid, insbesondere Kalium- oder Natriumhydroxid, oder
   gegebenenfalls Alkalialkylsilantriolat, bevorzugt Kaliumalkylsilantriolat, besonders bevorzugt Kaliummethylsilantriolat, und mindestens einen Aminoalkohol, bevorzugt 2-Amino-2-ethyl-1,3-propandiol oder 2-Amino-2-methyl-1-propanol sowie gegebenenfalls 2-Amino-1-butanol, besonders bevorzugt 2-Amino-2-ethyl-1,3-propandiol, und Alkali- und/oder Erdalkalihydroxid, insbesondere Kalium- oder Natriumhydroxid,
in wässrigen Beschichtungsstoffen, insbesondere Dispersionsbeschichtungsstoffen wie Dispersionsfarben, oder bei der Herstellung von wässrigen Beschichtungsstoffen, insbesondere Dispersionsbeschichtungsstoffen wie Dispersionsfarben, zur Verringerung, Unterbindung oder Eliminierung des Wachstums von Mikroorganismen, insbesondere Bakterien und/oder Schimmelpilzen.

Für die Komponente d3) wird für die vorangehend spezifizierte Verwendung bevorzugt zurückgegriffen auf
d3g) mindestens einen 2-Ammo-2-ethyl-1,3-propandiol,
N, N, N', N'-Tetra-(hydroxyalkyl)hexamethylendiamin, bevorzugt N, N, N', N'-Tetra-(2-hydroxypropyl)hexamethylendiamin,
Nitrilotrimethylphosphonsäure und/oder 1-Hydroxyethan-1,1-diphosphonsäure, und/oder deren Salzeoder Ester, und mindestens ein Kaliummethylsilantriolat.

Die der Erfindung zugrunde liegende Aufgabe wird des Weiteren gelöst durch ein Verfahren zur Herstellung eines wässrigen Beschichtungsstoffs, umfassend die Schritte
xi) Zurverfügungstellung der Komponenten a) bis c) und gegebenenfalls mindestens einer der Komponenten e) oder f),
xii) Vermengen der Komponenten a) bis e) und d1), d2), d3), d4) und/oder d5) sowie gegebenenfalls mindestens einer der Komponenten e) oder f) unter Erhalt eines wässrigen Beschichtungsstoffs, wobei
   Wasser anteilig oder vollständig vorgelegt wird, und
xiii) Isolieren des Beschichtungsstoffs.

Der erfindungsgemäße wässrige Beschichtungsstoff kann hierbei sogar mittels eines Airless-Spritzgeräts auf die beschichtbare Oberfläche des Substrats aufgebracht werden.

Der vorliegenden Erfindung liegt die überraschende Erkenntnis zugrunde, dass die erfindungsgemäßen wässrigen Beschichtungsstoffe sich in herkömmlichen industriellen Produktionsanlagen, insbesondere dauerhaft, unproblematisch im Wesentlichen konservierungsmittelfrei oder sogar konservierungsmittelfrei herstellen lassen. Die erfindungsgemäßen wässrigen Beschichtungsstoffe zeigen eine verstärkte Resistenz gegen Bakterien- und Pilzbefall sowohl während der Produktion als auch während der Lagerung. Dies trifft insbesondere auch zu auf die Herstellung im Wesentlichen konservierungsmittelfreier sowie insbesondere auch konservierungsmittelfreier wässriger Beschichtungsstoffe, die regelmäßig mit einem hohen pH-Wert ausgestattet sind, beispielsweise im Bereich von 10,5 bis 12,0 oder von 11,0 bis 11,5. Auch herkömmliche industrielle Anlagen, die bei der Herstellung von erfindungsgemäßen wässrigen Beschichtungsstoffen zum Einsatz kommen, können betrieben werden, ohne befürchten zu müssen, dass Bakterien oder Pilze dauerhaft eingetragen werden. Die Anzahl der Reinigungs- und Wartungszyklen kann dadurch auf ein sehr geringes Maß gehalten werden. Auch wird das Risiko signifikant reduziert sowie insbesondere auch unterbunden, dass die hergestellten Beschichtungsstoffe durch ungewollte Keimbildung während der Herstellung oder der Lagerung zu Verfärbungen, Geruchsbildung und/oder, insbesondere und, Viskositätsveränderungen neigen. Ferner gelingt es mit der vorliegenden Erfindung, dass eine auf Bakterien oder Pilze zurückgehende Reduzierung des pH-Werts der Beschichtungsstoffe während der Herstellung oder Lagerung stark zurückgedrängt oder insbesondere auch vermieden werden kann. Ohne an eine Theorie gebunden zu sein, wird vermutet, dass durch die Zugabe bzw. Anwesenheit der Komponente d) dem Wachstum und der Vermehrung von Mikroorganismen wie Bakterien und Pilzen entgegengewirkt werden kann. Die erfindungsgemäßen Beschichtungsstoffe zeichnen sich demgemäß auch durch eine verstärkte Resilienz gegen Bakterien und Pilze aus. Mit den erfindungsgemäßen Beschichtungsstoffen gelingt es somit, die Produktintegrität während der Produktions- und Lagerphase zu gewährleisten, und zwar selbst mit Beschichtungsstoffen, die im Wesentlichen frei sowie insbesondere frei von Konservierungsmitteln sind und die einen hohen pH-Wert aufweisen, z.B. im Bereich von 10,5 bis 12,0 oder von 11,0 bis 11,5.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässriger Beschichtungsstoff, insbesondere Dispersionsbeschichtungsstoff, gebildet aus oder enthaltend
a) mindestens ein Bindemittel ausgewählt aus der Gruppe bestehend aus wässrigen (Meth)acrylat-Homopolymer/Siliciumdioxid-Hybrid-Dispersionen, wässrigen (Meth)acrylat-Copolymer/Siliciumdioxid-Hybrid-Dispersionen, wässrigen (Meth)acrylat/(Meth)acrylsäure-Copolymer/Siliciumdioxid-Hybrid-Dispersionen, wässrigen Organosilikat-Hybridbindemittel-Dispersionen, wässrigen Dispersionen enthaltend (Meth)acrylat-Homopolymere, wässrigen Dispersionen enthaltend (Meth)acrylat-Copolymere, wässrigen Dispersionen enthaltend Vinylacetat-Copolymere, insbesondere Vinylacetat/Ethylen-Copolymere, wässrigen Dispersionen enthaltend Vinylaromat/AcrylatCopolymere, Acrylharze, Acrylsilikonharze, Silikonharze, Urethanharze, ungesättigte Polyesterharze, Alkydharze, insbesondere emulgierte Alkydharze, und deren beliebige Mischungen,
b) mindestens einen Füllstoff, insbesondere einen silikatischen und/oder carbonatischen Füllstoff,
c) mindestens ein Rheologieadditiv, insbesondere Verdicker, und
d2) Alkalialkylsilantriolat, bevorzugt Kaliumalkylsilantriolat, besonders bevorzugt Kaliummethylsilantriolat, und
N, N, N', N'-Tetra-(hydroxyalkyl)hexamethylendiamin, bevorzugt N, N, N', N'-Tetra-(2-hydroxypropyl)hexamethylendiamin, sowie
gegebenenfalls mindestens einen Aminoalkohol, bevorzugt 2-Amino-2-ethyl-1,3-propandiol und/oder 2-Amino-2-methyl-1-propanol, besonders bevorzugt 2-Amino-2-ethyl-1,3-propandiol, und/oder Alkali- und/oder Erdalkalihydroxid, insbesondere Kalium- und/oder Natriumhydroxid
und/oder
d3) mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, und
N, N, N', N'-Tetra-(hydroxyalkyl)hexamethylendiamin, bevorzugt N, N, N', N'-Tetra-(2-hydroxypropyl)hexamethylendiamin,
Alkalialkylsilantriolat, bevorzugt Kaliumalkylsilantriolat, besonders bevorzugt Kaliummethylsilantriolat, und
Alkylphosphonsäure, insbesondere Nitrilotrimethylphosphonsäure und/oder 1-Hydroxyethan-1,1-diphosphonsäure,
Salzen der Alkylphosphonsäure,
Estern der Alkylphosphonsäure
und beliebigen Mischungen hiervon, und/oder
d4) Alkalialkylsilantriolat, bevorzugt Kaliumalkylsilantriolat, besonders bevorzugt Kaliummethylsilantriolat, und
mindestens eine Alkylphosphonsäure, insbesondere Nitrilotrimethylphosphonsäure und/oder 1-Hydroxyethan-1,1-diphosphonsäure, und/oder deren Salze oder Ester und/oder
d5) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandiammonium-Salz und
gegebenenfalls Alkalialkylsilantriolat, bevorzugt Kaliumalkylsilantriolat, besonders bevorzugt Kaliummethylsilantriolat, oder
gegebenenfalls Alkalialkylsilantriolat, bevorzugt Kaliumalkylsilantriolat, besonders bevorzugt Kaliummethylsilantriolat, und mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, oder
gegebenenfalls Alkalialkylsilantriolat, bevorzugt Kaliumalkylsilantriolat, besonders bevorzugt Kaliummethylsilantriolat, und Alkali- und/oder Erdalkalihydroxid, insbesondere Kalium- und/oder Natriumhydroxid, oder
gegebenenfalls Alkalialkylsilantriolat, bevorzugt Kaliumalkylsilantriolat, besonders bevorzugt Kaliummethylsilantriolat, und mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, und Alkali- und/oder
Erdalkalihydroxid, insbesondere Kalium- und/oder Natriumhydroxid.

2. Wässriger Beschichtungsstoff nach Anspruch 1, ferner umfassend
e) mindestens ein pH-Wert-Einstellmittel und/oder, insbesondere und,
f) mindestens ein Netz- und/oder Dispergiermittel.

3. Wässriger Beschichtungsstoff nach Anspruch 1 oder 2, **dadurch gekennzeichnet, dass** die Komponente d3):
d3g) 2-Amino-2-ethyl-1,3-propandiol,
N, N, N', N'-Tetra-(hydroxyalkyl)hexamethylendiamin, bevorzugt N, N, N', N'-Tetra-(2-hydroxypropyl)hexamethylendiamin,
Nitrilotrimethylphosphonsäure und/oder 1-Hydroxyethan-1,1-diphosphonsäure und/oder deren Salze oder Ester und
Kaliummethylsilantriolat enthält.

4. Wässriger Beschichtungsstoff nach einem der vorangehenden Ansprüche, enthaltend als Komponente d5)
d5a) mindestens ein N, N'-bis-(2-Hydroxypropyl)-N,N,N',N'-tetramethyl-1,6-hexandiammonium-Salz und Kaliummethylsilantriolat, oder
d5b) mindestens ein N, N'-bis-(2-Hydroxypropyl)-N,N,N',N'-tetramethyl-1,6-hexandiammonium-Salz, Kaliummethylsilantriolat und 2-Amino-2-ethyl-1,3-propandiol, oder
d5c) mindestens ein N, N'-bis-(2-Hydroxypropyl)-N,N,N',N'-tetramethyl-1,6-hexandiammonium-Salz, Kaliummethylsilantriolat und Kalium- und/oder Natriumhydroxid, oder
d5d) mindestens ein N, N'-bis-(2-Hydroxypropyl)-N,N,N',N'-tetramethyl-1,6-hexandiammonium-Salz, Kaliummethylsilantriolat, 2-Amino-2-ethyl-1,3-propandiol, und Kalium- und/oder Natriumhydroxid.

5. Wässriger Beschichtungsstoff nach einem der vorangehenden Ansprüche, **dadurch gekennzeichnet, dass**
dieser im Wesentlichen frei, insbesondere frei, von Konservierungsmitteln ist.

6. Wässriger Beschichtungsstoff nach Anspruch 5, **dadurch gekennzeichnet, dass** dieser einen pH-Wert im Bereich von 9,5 bis 12,0, insbesondere im Bereich von 10,5 bis 12,0, aufweist oder auf einen pH-Wert im Bereich von 9,5 bis 12,0, insbesondere im Bereich von 10,5 bis 12,0, eingestellt ist.

7. Wässriger Beschichtungsstoff nach Anspruch 6, **dadurch gekennzeichnet, dass** der pH-Wert mittels Alkali- und/oder Erdalkalihydroxiden und/oder mittels Aminen und/oder mittels Wasserglas und/oder mittels Alkylalkoxysilanen, Alkylalkoxysiloxanen, Monoalkylsilantriol, Dialkylsilandiol, Trialkylsilanol, Alkalisalzen von Monoalkylsilantriol, insbesondere Kaliummethylsilantriolat und/oder Kaliumethylsilantriolat, Dialkylsilandiol und/oder Trialkylsilanol eingestellt ist, bevorzugt mittels Alkalihydroxiden und wasserlöslichen Alkylsilikonaten und gegebenenfalls Wasserglas sowie besonders bevorzugt mittels Alkalihydroxiden.

8. Wässriger Beschichtungsstoff nach einem der Ansprüche 1 bis 5, **dadurch gekennzeichnet, dass**
dieser einen pH-Wert im Bereich von 7,0 bis kleiner 9,5, insbesondere im Bereich von 8,0 bis kleiner 9,5, aufweist oder auf einen pH-Wert im Bereich von 7,0 bis kleiner 9,5, insbesondere im Bereich von 8,0 bis kleiner 9,5, eingestellt ist.

9. Wässriger Beschichtungsstoff nach einem der vorangehenden Ansprüche, **gekennzeichnet durch**
einen Gehalt an Komponente d1) im Bereich von 0,01 bis 1,0 Gewichtsprozent (Feststoffanteil), bevorzugt 0,05 bis 0,5 Gewichtsprozent, besonders bevorzugt 0,06 bis 0,3 Gewichtsprozent und ganz besonders bevorzugt 0,08 bis 0,2 Gewichtsprozent, jeweils bezogen auf das Gesamtgewicht des Beschichtungsstoffes, und/oder
einen Gehalt an Alkalialkylsilantriolat, bevorzugt Kaliumalkylsilantriolat, besonders bevorzugt Kaliummethylsilantriolat, im Bereich von 0,05 bis 1,0 Gewichtsprozent (Feststoffanteil), bevorzugt 0,08 bis 0,75 Gewichtsprozent und besonders bevorzugt 0,10 bis 0,60 Gewichtsprozent, jeweils bezogen auf das Gesamtgewicht des Beschichtungsstoffes, und/oder
einen Gehalt an Komponente d3) im Bereich von 0,05 bis 1,5 Gewichtsprozent (Wirkstoff- bzw. Feststoffanteil), bevorzugt 0,1 bis 1 % Gewichtsprozent und besonders bevorzugt 0,2 bis 0,8 Gewichtsprozent, jeweils bezogen auf das Gesamtgewicht des Beschichtungsstoffes, und/oder
einen Gehalt an Komponente d4) im Bereich von 0,1 bis 2,0 Gewichtsprozent (Feststoffanteil), bevorzugt von 0,2 bis 1,8 Gewichtsprozent und besonders bevorzugt von 0,3 bis 1,2 Gewichtsprozent, jeweils bezogen auf das Gesamtgewicht des Beschichtungsstoffes, und/oder
einen Gehalt an Komponente d5) im Bereich von 0,01 bis 1,0 Gewichtsprozent (Feststoffanteil), bevorzugt von 0,05 bis 0,5 Gewichtsprozent und besonders bevorzugt von 0,05 bis 0,2 Gewichtsprozent, jeweils bezogen auf das Gesamtgewicht des Beschichtungsstoffes.

10. Wässriger Beschichtungsstoff nach einem der vorangehenden Ansprüche, **dadurch gekennzeichnet, dass**
der Füllstoff ausgewählt ist aus der Gruppe bestehend aus Calciumsilikathydraten, insbesondere Tobermorit, Alumino-Hydroxokomplexen, insbesondere MₓAl(OH)_{y} mit M = Na, K und 1 > x < 3 und 4 > y < 6, wasserhaltigen Sulfaten, insbesondere Ettringit, und beliebigen Mischungen hiervon.

11. Wässriger Beschichtungsstoff nach einem der vorangehenden Ansprüche, **dadurch gekennzeichnet, dass**
diese eine Dispersionsinnenfarbe, eine Dispersionsaußenfarbe, eine Spachtelmasse, eine Grundierung, einen Putz, einen Lack, eine Lasur, einen Bautenkleber, Armierungsmasse oder eine Farbpaste darstellt.

12. Beschichtung erhalten oder erhältlich durch ein- oder mehrmaliges Auftragen des Beschichtungsstoffes nach einem der vorangehenden Ansprüche auf einer Substratoberfläche.

13. Beschichtetes Substrat, insbesondere beschichtete Fassade, erhalten durch Behandeln eines Substrats mit dem wässrigen Beschichtungsstoff nach einem der Ansprüche 1 bis 11.

14. Verwendung des Beschichtungsstoffes nach einem der Ansprüche 1 bis 11 für die Herstellung von oder als Dispersionsinnenfarbe, Dispersionsaußenfarbe, Spachtelmasse, Lacke, Lasur, Bautenkleber, Armierungsmasse, Grundierung, Putz oder Farbpaste.

15. Verwendung des Beschichtungsstoffes nach einem der Ansprüche 1 bis 11 für die Verstärkung der Resistenz gegen Bakterien- und/oder Schimmelbefall während der Produktion und Lagerung.

16. Verwendung nach Anspruch 14 oder 15, von
d1) N, N, N', N'-Tetra-(hydroxyalkyl)hexamethylendiamin, bevorzugt N, N, N', N'-Tetra-(2-hydroxypropyl)hexamethylendiamin, und/oder
d2) Alkalialkylsilantriolat, bevorzugt Kaliumalkylsilantriolat, besonders bevorzugt Kaliummethylsilantriolat, und
N, N, N', N'-Tetra-(hydroxyalkyl)hexamethylendiamin, bevorzugt N, N, N', N'-Tetra-(2-hydroxypropyl)hexamethylendiamin, sowie
gegebenenfalls mindestens einen Aminoalkohol, bevorzugt 2-Amino-2-ethyl-1,3-propandiol und/oder 2-Amino-2-methyl-1-propanol, besonders bevorzugt 2-Amino-2-ethyl-1,3-propandiol,
und/oder Alkali- und/oder Erdalkalihydroxid, insbesondere Kalium- und/oder Natriumhydroxid,
und/oder
d3) mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, und
N, N, N', N'-Tetra-(hydroxyalkyl)hexamethylendiamin, bevorzugt N, N, N', N'-Tetra-(2-hydroxypropyl)hexamethylendiamin,
Alkalialkylsilantriolat, bevorzugt Kaliumalkylsilantriolat, besonders bevorzugt Kaliummethylsilantriolat, und
Alkylphosphonsäure, insbesondere Nitrilotrimethylphosphonsäure und/oder 1-Hydroxyethan-1,1-diphosphonsäure,
Salzen der Alkylphosphonsäure,
Estern der Alkylphosphonsäure
und beliebigen Mischungen hiervon, und/oder
d4) Alkalialkylsilantriolat, bevorzugt Kaliumalkylsilantriolat, besonders bevorzugt Kaliummethylsilantriolat, und mindestens eine
Alkylphosphonsäure, insbesondere Nitrilotrimethylphosphonsäure und/oder 1-Hydroxyethan-1,1-diphosphonsäure, und/oder deren Salze oder Ester
und/oder
d5) mindestens ein Salz einer quartären Ammoniumverbindung, bevorzugt ein N, N'-bis-(Hydroxyalkyl)-N,N,N',N'-tetraalkyl-1,6-hexandiammonium-Salz, besonders bevorzugt ein N, N'-bis-(2-hydroxypropyl)-N,N,N',N'-tetramethyl-1,6-hexandiammonium-Salz, und
gegebenenfalls Alkalialkylsilantriolat, bevorzugt Kaliumalkylsilantriolat, besonders bevorzugt Kaliummethylsilantriolat, oder
gegebenenfalls Alkalialkylsilantriolat, bevorzugt Kaliumalkylsilantriolat, besonders bevorzugt Kaliummethylsilantriolat, und mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, oder
gegebenenfalls Alkalialkylsilantriolat, bevorzugt Kaliumalkylsilantriolat, besonders bevorzugt Kaliummethylsilantriolat, und Alkali- und/oder Erdalkalihydroxid, insbesondere Kalium- und/oder Natriumhydroxid, oder
gegebenenfalls Alkalialkylsilantriolat, bevorzugt Kaliumalkylsilantriolat, besonders bevorzugt Kaliummethylsilantriolat, und mindestens einen Aminoalkohol, bevorzugt 2-Amino-2-ethyl-1,3-propandiol und/oder 2-Amino-2-methyl-1-propanol sowie gegebenenfalls 2-Amino-1-butanol, besonders bevorzugt 2-Amino-2-ethyl-1,3-propandiol, und Alkali- und/oder
Erdalkalihydroxid, insbesondere Kalium- und/oder Natriumhydroxid,
in wässrigen Beschichtungsstoffen, insbesondere Dispersionsbeschichtungsstoffen, oder bei der Herstellung von wässrigen Beschichtungsstoffen, insbesondere Dispersionsbeschichtungsstoffen, zur Verringerung, Unterbindung oder Eliminierung des Wachstums von Mikroorganismen, insbesondere Bakterien und/oder Schimmelpilzen.

17. Verwendung nach Anspruch 16, **dadurch gekennzeichnet, dass**
d3g) die Komponente d3) mindestens einen 2-Amino-2-ethyl-1,3-propandiol, N, N, N', N'-Tetra-(hydroxyalkyl)hexamethylendiamin, bevorzugt N, N, N', N'-Tetra-(2-hydroxypropyl)hexamethylendiamin, Nitrilotrimethylphosphonsäure und/oder 1-Hydroxyethan-1,1-diphosphonsäure und/oder deren Salze oder Ester und mindestens ein Kaliummethylsilantriolat
umfasst oder hieraus besteht.

18. Verfahren zur Herstellung eines wässrigen Beschichtungsstoffs nach einem der Ansprüche 1 bis 11, umfassend die Schritte
xi) Zurverfügungstellung der Komponenten a) bis c) und d1), d2), d3), d4) und/oder d5) und gegebenenfalls mindestens einer der Komponenten e) oder f),
xii) Vermengen der Komponenten a) bis c) und d1), d2), d3), d4) und/oder d5) und gegebenenfalls mindestens einer der Komponenten e) oder f) unter Erhalt eines wässrigen Beschichtungsstoffs, wobei Wasser anteilig oder vollständig vorgelegt wird, und
xiii) Isolieren des Beschichtungsstoffs.

## Claims

1. An aqueous coating material, in particular dispersion coating material, formed by or containing
a) at least one binding agent selected from the group consisting of aqueous (meth)acrylate homopolymer/silicon dioxide hybrid dispersions, aqueous (meth)acrylate copolymer/silicon dioxide hybrid dispersions, aqueous (meth)acrylate/(meth)acrylic acid copolymer/silicon dioxide hybrid dispersions, aqueous organosilicate hybrid binding agent dispersions, aqueous dispersions containing (meth)acrylate homopolymers, aqueous dispersions containing (meth)acrylate copolymers, aqueous dispersions containing vinyl acetate copolymers, in particular vinyl acetate/ethylene copolymers, aqueous dispersions containing vinyl aromatic/acrylate copolymers, acrylic resins, acrylic silicone resins, silicone resins, urethane resins, unsaturated polyester resins, alkyd resins, in particular emulsified alkyd resins, and any mixtures thereof,
b) at least one filler, in particular a silicate and/or carbonate filler,
c) at least one rheological additive, in particular thickener, and
d2) alkali alkylsilanetriolate, preferably potassium alkylsilanetriolate, particularly preferably potassium methylsilanetriolate, and
N, N, N', N'-tetra-(hydroxyalkyl)hexamethylenediamine, preferably N, N, N', N'-tetra-(2-hydroxypropyl)hexamethylenediamine, and
optionally at least one amino alcohol, preferably 2-amino-2-ethyl-1,3-propanediol and/or 2-amino-2-methyl-1-propanol, particularly preferably 2-amino-2-ethyl-1,3-propanediol, and/or alkali and/or alkaline earth hydroxide, in particular potassium and/or sodium hydroxide,
and/or
d3) at least one amino alcohol, preferably 2-amino-2-ethyl-1,3-propanediol and/or 2-amino-2-methyl-1-propanol and optionally 2-amino-1-butanol, particularly preferably 2-amino-2-ethyl-1,3-propanediol, and
N, N, N', N'-tetra-(hydroxyalkyl)hexamethylenediamine, preferably N, N, N', N'-tetra-(2-hydroxypropyl)hexamethylenediamine,
alkali alkylsilanetriolate, preferably potassium alkylsilanetriolate, particularly preferably potassium methylsilanetriolate, and
alkylphosphonic acid, in particular nitrilotrimethylphosphonic acid and/or 1-hydroxyethane-1,1-diphosphonic acid,
salts of alkylphosphonic acid,
esters of alkylphosphonic acid,
and any mixtures thereof, and/or
d4) alkali alkylsilanetriolate, preferably potassium alkylsilanetriolate, particularly
preferably potassium methylsilanetriolate, and
at least one alkylphosphonic acid, in particular nitrilotrimethylphosphonic acid and/or 1-hydroxyethane-1,1-diphosphonic acid, and/or salts or esters thereof, and/or
d5) at least one salt of a quaternary ammonium compound, preferably an N,N-bis-(hydroxyalkyl)-N,N,N',N'-tetraalkyl-1,6-hexanediammonium salt, particularly preferably an N, N'-bis-(2-hydroxypropyl)-N,N,N',N'-tetramethyl-1,6-hexanediammonium salt, and
optionally alkali alkylsilanetriolate, preferably potassium alkylsilanetriolate, particularly preferably potassium methylsilanetriolate, or
optionally alkali alkylsilanetriolate, preferably potassium alkylsilanetriolate, particularly preferably potassium methylsilanetriolate, and at least one amino alcohol, preferably 2-amino-2-ethyl-1,3 -propanediol and/or 2-amino-2-methyl-1-propanol, and
optionally 2-amino-1-butanol, particularly preferably 2-amino-2-ethyl-1,3-propanediol, or
optionally alkali alkylsilanetriolate, preferably potassium alkylsilanetriolate, particularly preferably potassium methylsilanetriolate, and alkali and/or alkaline earth hydroxide, in particular potassium and/or sodium hydroxide, or optionally alkali alkylsilanetriolate, preferably potassium alkylsilanetriolate, particularly preferably potassium methylsilanetriolate, and at least one amino alcohol, preferably 2-amino-2-ethyl-1,3-propanediol and/or 2-amino-2-methyl-1-propanol, and optionally 2-amino-1-butanol, particularly preferably 2-amino-2-ethyl-1,3-propanediol, and alkali and/or alkaline earth hydroxide, in particular potassium and/or sodium hydroxide.

2. The aqueous coating material according to Claim 1, further comprising
e) at least one pH adjusting agent and/or, in particular and,
f) at least one wetting and/or dispersing agent.

3. The aqueous coating material according to Claim 1 or 2, **characterized in that** the component d3) contains:
d3g) 2-amino-2-ethy1-1,3-propanediol,
N, N, N', N'-tetra-(hydroxyalkyl)hexamethylenediamine, preferably N, N, N', N'-tetra-(2-hydroxypropyl)hexamethylenediamine,
nitrilotrimethylphosphonic acid and/or 1-hydroxyethane-1,1-diphosphonic acid and/or salts or esters thereof and potassium methylsilanetriolate.

4. The aqueous coating material according to any one of the preceding claims, containing as component d5)
d5a) at least one N, N'-bis-(2-hydroxypropyl)-N,N,N',N'-tetramethyl-1,6-hexanediammonium salt and potassium methylsilanetriolate, or
d5b) at least one N, N'-bis-(2-hydroxypropyl)-N,N,N',N'-tetramethyl-1,6-hexanediammonium salt, potassium methylsilanetriolate and 2-amino-2-ethyl-1,3-propanediol, or
d5c) at least one N, N'-bis-(2-hydroxypropyl)-N,N,N',N'-tetramethyl-1,6-hexanediammonium salt, potassium methylsilanetriolate and potassium and/or sodium hydroxide, or
d5d) at least one N, N'-bis-(2-hydroxypropyl)-N,N,N',N'-tetramethyl-1,6-hexanediammonium salt, potassium methylsilanetriolate, 2-amino-2-ethyl-1,3-propanediol, and potassium and/or sodium hydroxide.

5. The aqueous coating material according to any one of the preceding claims, **characterized in that**
it is substantially free, in particular free, of preservatives.

6. The aqueous coating material according to Claim 5, **characterized in that** this has a pH value in the range of 9.5 to 12.0, in particular in the range of 10.5 to 12.0, or is adjusted to a pH value in the range of 9.5 to 12.0, in particular in the range of 10.5 to 12.0.

7. The aqueous coating material according to Claim 6, **characterized in that** the pH value is adjusted by means of alkali and/or alkaline earth hydroxides, and/or by means of amines and/or by means of water glass, and/or by means of alkylalkoxysilanes, alkylalkoxysiloxanes, monoalkylsilanetriol, dialkylsilanediol, trialkylsilanol, alkali salts of monoalkylsilanetriol, in particular potassium methylsilanetriolate, and/or potassium methylsilanetriolate, dialkylsilanediol, and/or trialkylsilanol, preferably by means of alkali hydroxides and water-soluble alkylsiliconates and optionally water glass and particularly preferably by means of alkali hydroxides.

8. The aqueous coating material according to any one of Claims 1 to 5, **characterized in that**
this has a pH value in the range of 7.0 to less than 9.5, in particular in the range of 8.0 to less than 9.5, or is adjusted to a pH value in the range of 7.0 to less than 9.5, in particular in the range of 8.0 to less than 9.5.

9. The aqueous coating material according to any one of the preceding claims, **characterized by**
a content of component d1) in the range of 0.01 to 1.0 weight percent (solids content), preferably 0.05 to 0.5 weight percent, particularly preferably 0.06 to 0.3 weight percent and most particularly preferably 0.08 to 0.2 weight percent, in each case with respect to the total weight of the coating material, and/or
a content of alkali alkylsilanetriolate, preferably potassium alkylsilanetriolate, particularly preferably potassium methylsilanetriolate, in the range of 0.05 to 1.0 weight percent (solids content), preferably 0.08 to 0.75 weight percent and particularly preferably 0.10 to 0.60 weight percent, in each case with respect to the total weight of the coating material, and/or
a content of component d3) in the range of 0.05 to 1.5 weight percent (active substances or solids content), preferably 0.1 to 1% weight percent and particularly preferably 0.2 to 0.8 weight percent, in each case with respect to the total weight of the coating material, and/or
a content of component d4) in the range of 0.1 to 2.0 weight percent (solids content), preferably 0.2 to 1.8 weight percent and particularly preferably 0.3 to 1.2 weight percent, in each case with respect to the total weight of the coating material, and/or a content of component d5) in the range of 0.01 to 1.0 weight percent (solids content), preferably 0.05 to 0.5 weight percent and particularly preferably 0.05 to 0.2 weight percent, in each case with respect to the total weight of the coating material.

10. The aqueous coating material according to any one of the preceding claims,
**characterized in that**
the filler is selected from the group consisting of calcium silicate hydrates, in particular tobermorite, alumino-hydroxocomplexes, in particular MₓAl(OH)_{y} with M = Na, K and 1 > x < 3 and 4 > y < 6, water containing sulfates, in particular ettringite, and any mixtures thereof.

11. The aqueous coating material according to any one of the preceding claims,
**characterized in that**
it is an interior dispersion paint, an exterior dispersion paint, a putty compound, a primer, a plaster, a varnish, a glaze, a building adhesive, reinforcing compound, or a color paste.

12. A coating obtained or obtainable by applying the coating material according to any one of the preceding claims one or more times onto a substrate surface.

13. A coated substrate, in particular coated facade, obtained by treating a substrate with the aqueous coating material according to any one of Claims 1 to 11.

14. Use of the coating material according to any one of Claims 1 to 11 for the production of or as interior dispersion paint, exterior dispersion paint, putty compound, varnish, glaze, building adhesive, reinforcing compound, primer, plaster, or color paste.

15. Use of the coating material according to any one of Claims 1 to 11 for increasing resistance to bacteria and/or mold during production and storage.

16. Use according to Claim 14 or 15, of
d1) N, N, N', N'-tetra-(hydroxyalkyl)hexamethylenediamine, preferably N, N, N', N'-tetra-(2-hydroxypropyl)hexamethylenediamine, and/or
d2) alkali alkylsilanetriolate, preferably potassium alkylsilanetriolate, particularly preferably potassium methylsilanetriolate, and
N, N, N', N'-tetra-(hydroxyalkyl)hexamethylenediamine, preferably N, N, N', N'-tetra-(2-hydroxypropyl)hexamethylenediamine, and
optionally at least one amino alcohol, preferably 2-amino-2-ethyl-1,3-propanediol and/or 2-amino-2-methyl-1-propanol, particularly preferably 2-amino-2-ethyl-1,3-propanediol,
and/or alkali and/or alkaline earth hydroxide, in particular potassium and/or sodium hydroxide,
and/or
d3) at least one amino alcohol, preferably 2-amino-2-ethyl-1,3-propanediol and/or
2-amino-2-methyl-1-propanol and optionally 2-amino-1-butanol, particularly preferably 2-amino-2-ethyl-1,3-propanediol, and
N, N, N', N'-tetra-(hydroxyalkyl)hexamethylenediamine, preferably N, N, N', N'-tetra-(2-hydroxypropyl)hexamethylenediamine,
alkali alkylsilanetriolate, preferably potassium alkylsilanetriolate, particularly preferably potassium methylsilanetriolate, and
alkylphosphonic acid, in particular nitrilotrimethylphosphonic acid and/or 1-hydroxyethane-1,1-diphosphonic acid,
salts of alkylphosphonic acid,
esters of alkylphosphonic acid,
and any mixtures thereof, and/or
d4) alkalialkylsilanetriolate, preferably potassium alkylsilanetriolate, particularly preferably potassium methylsilanetriolate, and at least one alkylphosphonic acid, in particular nitrilotrimethylphosphonic acid and/or 1-hydroxyethane-1,1-diphosphonic acid, and/or salts or esters thereof, and/or
d5) at least one salt of a quaternary ammonium compound, preferably an N,N'-bis-(hydroxyalkyl)-N,N,N',N'-tetraalkyl-1,6-hexanediammonium salt, particularly preferably an N, N'-bis-(2-hydroxypropyl)-N,N,N',N'-tetramethyl-1,6-hexanediammonium salt, and
optionally alkali alkylsilanetriolate, preferably potassium alkylsilanetriolate, particularly preferably potassium methylsilanetriolate, or
optionally alkali alkylsilanetriolate, preferably potassium alkylsilanetriolate, particularly preferably potassium methylsilanetriolate, and at least one amino alcohol, preferably 2-amino-2-ethyl-1,3-propanediol and/or 2-amino-2-methyl-1-propanol and optionally 2-amino-1-butanol, particularly preferably 2-amino-2-ethyl-1,3-propanediol, or
optionally alkali alkylsilanetriolate, preferably potassium alkylsilanetriolate, particularly preferably potassium methylsilanetriolate, and alkali and/or alkaline earth metal hydroxide, in particular potassium and/or sodium hydroxide, or optionally alkali alkylsilanetriolate, preferably potassium alkylsilanetriolate, particularly preferably potassium methylsilanetriolate, and at least one amino alcohol, preferably 2-amino-2-ethyl-1,3-propanediol and/or 2-amino-2-methyl-1-propanol and optionally 2-amino-1-butanol, particularly preferably 2-amino-2-ethyl-1,3-propanediol, and alkali and/or alkaline earth metal hydroxide, in particular potassium and/or sodium hydroxide,
in aqueous coating materials, in particular dispersion coating materials, or in the manufacture of aqueous coating materials, in particular dispersion coating materials, for reducing, inhibiting or eliminating the growth of microorganisms, in particular bacteria and/or molds.

17. Use according to Claim 16, **characterized in that**
d3g) the component d3) comprises or consists of at least one 2-amino-2-ethyl-1,3-propanediol, N, N, N', N'-tetra-(hydroxyalkyl)hexamethylenediamine, preferably N, N, N', N'-tetra-(2-hydroxypropyl)hexamethylenediamine, nitrilotrimethylphosphonic acid and/or 1-hydroxyethane-1,1-diphosphonic acid and/or salts or esters thereof, and at least one potassium methylsilanetriolate.

18. A method for producing an aqueous coating material according to any one of Claims 1 to 11, comprising the steps
xi) providing the components a) to c) and d1), d2), d3), d4) and/or d5) and optionally at least one of the components e) or f),
xii) mixing components a) to c) and d1), d2), d3), d4) and/or d5) and optionally at least one of components e) or f) to obtain an aqueous coating material, wherein water is introduced partially or completely, and
xiii) isolating the coating material.

## Revendications

1. Matériau de revêtement aqueux, en particulier matériau de revêtement en dispersion, formé par ou contenant
a) au moins un liant sélectionné parmi le groupe se composant de : les dispersions aqueuses d'homopolymère de (méth)acrylate/hybride de dioxyde de silicium, les dispersions aqueuses de copolymère de (méth)acrylate/hybride de dioxyde de silicium, les dispersions aqueuses de copolymère de (méth)acrylate/acide (méth)acrylique/hybride de dioxyde de silicium, les dispersions aqueuses de liant hybride d'organosilicate, les dispersions aqueuses contenant des homopolymères de (méth)acrylate, les dispersions aqueuses contenant des copolymères de (méth)acrylate, les dispersions aqueuses contenant des copolymères d'acétate de vinyle, en particulier des copolymères d'acétate de vinyle/éthylène, les dispersions aqueuses contenant des copolymères de vinylaromatique/acrylate, les résines acryliques, les résines d'acrylosilicone, les résines de silicone, les résines d'uréthane, les résines de polyester insaturé, les résines alkydes, en particulier les résines alkydes émulsifiées, et des mélanges quelconques de ceux-ci,
b) au moins une charge, en particulier une charge silicatée et/ou carbonatée,
c) au moins un additif rhéologique, en particulier un épaississant, et
d2) de l'alkylsilanetriolate d'alcali, de préférence de l'alkylsilanetriolate de potassium, en
particulier de préférence du méthylsilanetriolate de potassium, et
de la N,N,N',N'-tétra-(hydroxyalkyl)hexaméthylènediamine, de préférence de la N,N,N',N'-tétra-(2-hydroxypropyl)hexaméthylènediamine, et, le cas échéant, au moins un aminoalcool, de préférence le 2-amino-2-éthyl-1,3-propanediol et/ou le 2-amino-2-méthyl-1-propanol, en particulier de préférence le 2-amino-2-éthyl-1,3-propanediol,
et/ou un hydroxyde alcalin et/ou alcalino-terreux, en particulier l'hydroxyde de potassium et/ou de sodium,
et/ou
d3) au moins un aminoalcool, de préférence le 2-amino-2-éthyl-1,3-propanediol et/ou le 2-amino-2-méthyl-1-propanol et, le cas échéant, le 2-amino-1-butanol, en particulier de préférence le 2-amino-2-éthyl-1,3-propanediol, et
de la N,N,N',N'-tétra-(hydroxyalkyl)hexaméthylènediamine, de préférence de la N,N,N',N'-tétra-(2-hydroxypropyl)hexaméthylènediamine,
de l'alkylsilanetriolate d'alcali, de préférence de l'alkylsilanetriolate de potassium, en particulier de préférence du méthylsilanetriolate de potassium, et
de l'acide alkylphosphonique, en particulier de l'acide nitrilotriméthylphosphonique et/ou de l'acide 1-hydroxyéthane-1,1-diphosphonique,
des sels de l'acide alkylphosphonique,
des esters de l'acide alkylphosphonique
et des mélanges quelconques de ceux-ci, et/ou
d4) de l'alkylsilanetriolate d'alcali, de préférence de l'alkylsilanetriolate de potassium, en particulier de préférence du méthylsilanetriolate de potassium, et au moins un acide alkylphosphonique, en particulier l'acide nitrilotriméthylphosphonique et/ou l'acide 1-hydroxyéthane-1,1-diphosphonique, et/ou des sels ou esters de ceux-ci, et/ou
d5) au moins un sel d'un composé d'ammonium quaternaire, de préférence un sel de N,N'-bis-(hydroxyalkyl)-N,N,N',N'-tétraalkyl-1,6-hexanediammonium, en particulier de préférence un sel de N,N'-bis-(2-hydroxypropyl)-N,N,N',N'-tétraméthyl-1,6-hexanediammonium et, le cas échéant,
de l'alkylsilanetriolate d'alcali, de préférence de l'alkylsilanetriolate de potassium, en particulier de préférence du méthylsilanetriolate de potassium, ou,
le cas échéant, de l'alkylsilanetriolate d'alcali, de préférence de l'alkylsilanetriolate de potassium, en particulier de préférence du méthylsilanetriolate de potassium, et au moins un aminoalcool, de préférence le 2-amino-2-éthyl-1,3-propanediol et/ou le 2-amino-2-méthyl-1-propanol et, le cas échéant, le 2-amino-1-butanol, en particulier de préférence le 2-amino-2-éthyl-1,3-propanediol, ou,
le cas échéant, de l'alkylsilanetriolate d'alcali, de préférence de l'alkylsilanetriolate de potassium, en particulier de préférence du méthylsilanetriolate de potassium, et un hydroxyde alcalin et/ou alcalino-terreux, en particulier l'hydroxyde de potassium et/ou de sodium, ou, le cas échéant, de l'alkylsilanetriolate d'alcali, de préférence de l'alkylsilanetriolate de potassium, en particulier de préférence du méthylsilanetriolate de potassium, et au moins un aminoalcool, de préférence le 2-amino-2-éthyl-1,3-propanediol et/ou le 2-amino-2-méthyl-1-propanol, et le cas échéant, le 2-amino-1-butanol, en particulier de préférence le 2-amino-2-éthyl-1,3-propanediol, et un hydroxyde alcalin et/ou alcalino-terreux, en particulier l'hydroxyde de potassium et/ou de sodium.

2. Matériau de revêtement aqueux selon la revendication 1, comprenant en outre
e) au moins un agent d'ajustement du pH et/ou, en particulier et,
f) au moins un agent mouillant et/ou dispersant.

3. Matériau de revêtement aqueux selon la revendication 1 ou 2, **caractérisé en ce que** le composant d3) contient :
d3g) du 2-amino-2-éthyl-1,3-propanediol,
de la N,N,N',N'-tétra-(hydroxyalkyl)hexaméthylènediamine, de préférence de la N,N,N',N'-tétra-(2-hydroxypropyl)hexaméthylènediamine,
de l'acide nitrilotriméthylphosphonique et/ou de l'acide 1-hydroxyéthane-1,1-diphosphonique et/ou des sels ou esters de ceux-ci et
du méthylsilanetriolate de potassium.

4. Matériau de revêtement aqueux selon l'une quelconque des revendications précédentes, contenant en tant que composant d5)
d5a) au moins un sel de N,N'-bis-(2-hydroxypropyl)-N,N,N',N'-tétraméthyl-1,6-hexanediammonium et du méthylsilanetriolate de potassium, ou
d5b) au moins un sel de N,N'-bis-(2-hydroxypropyl)-N,N,N',N'-tétraméthyl-1,6-hexanediammonium, du méthylsilanetriolate de potassium et du 2-amino-2-éthyl-1,3-propanediol, ou
d5c) au moins un sel de N,N'-bis-(2-hydroxypropyl)-N,N,N',N'-tétraméthyl-1,6-hexanediammonium, du méthylsilanetriolate de potassium et de l'hydroxyde de potassium et/ou de sodium, ou
d5d) au moins un sel de N,N'-bis-(2-hydroxypropyl)-N,N,N',N'-tétraméthyl-1,6-hexanediammonium, du méthylsilanetriolate de potassium, du 2-amino-2-éthyl-1,3-propanediol, et de l'hydroxyde de potassium et/ou de sodium.

5. Matériau de revêtement aqueux selon l'une quelconque des revendications précédentes, **caractérisé en ce que**
celui-ci est essentiellement exempt, en particulier exempt, d'agents conservateurs.

6. Matériau de revêtement aqueux selon la revendication 5, **caractérisé en ce que** celui-ci présente un pH dans la plage allant de 9,5 à 12,0, en particulier dans la plage allant de 10,5 à 12,0, ou est ajusté à un pH dans la plage allant de 9,5 à 12,0, en particulier dans la plage allant de 10,5 à 12,0.

7. Matériau de revêtement aqueux selon la revendication 6, **caractérisé en ce que** le pH est ajusté au moyen d'hydroxydes alcalins et/ou alcalino-terreux et/ou au moyen d'amines et/ou au moyen de verre soluble et/ou au moyen d'alkylalcoxysilanes, d'alkylalcoxysiloxanes, de monoalkylsilanetriol, de dialkylsilanediol, de trialkylsilanol, de sels alcalins de monoalkylsilanetriol, en particulier de méthylsilanetriolate de potassium et/ou de méthylsilanetriolate de potassium, de dialkylsilanediol et/ou de trialkylsilanol, de préférence au moyen d'hydroxydes alcalins et d'alkylsiliconates solubles dans l'eau et, le cas échéant, de verre soluble, ainsi que en particulier de préférence au moyen d'hydroxydes alcalins.

8. Matériau de revêtement aqueux selon l'une quelconque des revendications 1 à 5,
**caractérisé en ce que**
celui-ci présente un pH dans la plage allant de 7,0 à moins de 9,5, en particulier dans la plage allant de 8,0 à moins de 9,5, ou est ajusté à un pH dans la plage allant de 7,0 à moins de 9,5, en particulier dans la plage allant de 8,0 à moins de 9,5.

9. Matériau de revêtement aqueux selon l'une quelconque des revendications précédentes, **caractérisé par**
une teneur en composant d1) dans la plage allant de 0,01 à 1,0 pour cent en poids (proportion de solides), de préférence de 0,05 à 0,5 pour cent en poids, en particulier de préférence de 0,06 à 0,3 pour cent en poids et tout particulièrement de préférence de 0,08 à 0,2 pour cent en poids, à chaque fois par rapport au poids total du matériau de revêtement, et/ou
une teneur en alkylsilanetriolate alcalin, de préférence en alkylsilanetriolate de potassium, en particulier de préférence en méthylsilanetriolate de potassium, dans la plage allant de 0,05 à 1,0 pour cent en poids (proportion de solides), de préférence de 0,08 à 0,75 pour cent en poids et en particulier de préférence de 0,10 à 0,60 pour cent en poids, à chaque fois par rapport au poids total du matériau de revêtement, et/ou une teneur en composant d3) dans la plage allant de 0,05 à 1,5 pour cent en poids (proportion de substances actives ou de solides), de préférence de 0,1 à 1 pour cent en poids et en particulier de préférence de 0,2 à 0,8 pour cent en poids, à chaque fois par rapport au poids total du matériau de revêtement, et/ou
une teneur en composant d4) dans la plage allant de 0,1 à 2,0 pour cent en poids (proportion de solides), de préférence de 0,2 à 1,8 pour cent en poids et en particulier de préférence de 0,3 à 1,2 pour cent en poids, à chaque fois par rapport au poids total du matériau de revêtement, et/ou
une teneur en composant d5) dans la plage allant de 0,01 à 1,0 pour cent en poids (proportion de solides), de préférence de 0,05 à 0,5 pour cent en poids et en particulier de préférence de 0,05 à 0,2 pour cent en poids, à chaque fois par rapport au poids total du matériau de revêtement.

10. Matériau de revêtement aqueux selon l'une quelconque des revendications précédentes, **caractérisé en ce que**
la charge est sélectionnée parmi le groupe se composant de : les silicates de calcium hydratés, en particulier la tobermorite, les complexes alumino-hydroxo, en particulier MₓAl(OH)_{y} avec M = Na, K et 1 > x < 3 et 4 > y < 6, les sulfates contenant de l'eau, en particulier l'ettringite, et des mélanges quelconques de ceux-ci.

11. Matériau de revêtement aqueux selon l'une quelconque des revendications précédentes, **caractérisé en ce que**
celui-ci est une peinture intérieure en dispersion, une peinture extérieure en dispersion, un enduit, un apprêt, un crépi, un vernis, une lasure, une colle de construction, une masse d'armature ou une pâte colorée.

12. Revêtement obtenu ou pouvant être obtenu par une ou plusieurs applications du matériau de revêtement selon l'une quelconque des revendications précédentes sur une surface de substrat.

13. Substrat revêtu, en particulier façade revêtue, obtenu par traitement d'un substrat avec le matériau de revêtement aqueux selon l'une quelconque des revendications 1 à 11.

14. Utilisation du matériau de revêtement selon l'une quelconque des revendications 1 à 11 pour la fabrication de ou en tant que peinture intérieure en dispersion, peinture extérieure en dispersion, enduit, vernis, lasure, colle de construction, masse d'armature, apprêt, crépi ou pâte colorée.

15. Utilisation du matériau de revêtement selon l'une quelconque des revendications 1 à 11 pour renforcer la résistance à la contamination bactérienne et/ou aux moisissures pendant la production et le stockage.

16. Utilisation selon la revendication 14 ou 15, de
d1) de la N,N,N',N'-tétra-(hydroxyalkyl)hexaméthylènediamine, de préférence de la N,N,N',N'-tétra-(2-hydroxypropyl)hexaméthylènediamine, et/ou
d2) de l'alkylsilanetriolate d'alcali, de préférence de l'alkylsilanetriolate de potassium, en particulier de préférence du méthylsilanetriolate de potassium, et de la N,N,N',N'-tétra-(hydroxyalkyl)hexaméthylènediamine, de préférence de la N,N,N',N'-tétra-(2-hydroxypropyl)hexaméthylènediamine, et, le cas échéant, au moins un aminoalcool, de préférence le 2-amino-2-éthyl-1,3-propanediol et/ou le 2-amino-2-méthyl-1-propanol, en particulier de préférence le 2-amino-2-éthyl-1,3-propanediol,
et/ou un hydroxyde alcalin et/ou alcalino-terreux, en particulier l'hydroxyde de potassium et/ou de sodium,
et/ou
d3) au moins un aminoalcool, de préférence le 2-amino-2-éthyl-1,3-propanediol
et/ou le 2-amino-2-méthyl-1-propanol et, le cas échéant, le 2-amino-1-butanol, en particulier de préférence le 2-amino-2-éthyl-1,3-propanediol, et
de la N,N,N',N'-tétra-(hydroxyalkyl)hexaméthylènediamine, de préférence de la N,N,N' ,N' -tétra-(2-hydroxypropyl)hexaméthylènediamine,
de l'alkylsilanetriolate d'alcali, de préférence de l'alkylsilanetriolate de potassium, en particulier de préférence du méthylsilanetriolate de potassium, et de l'acide alkylphosphonique, en particulier de l'acide nitrilotriméthylphosphonique et/ou de l'acide 1-hydroxyéthane-1,1-diphosphonique,
des sels de l'acide alkylphosphonique,
des esters de l'acide alkylphosphonique
et des mélanges quelconques de ceux-ci, et/ou
d4) de l'alkylsilanetriolate d'alcali, de préférence de l'alkylsilanetriolate de potassium, en particulier de préférence du méthylsilanetriolate de potassium, et au moins un acide alkylphosphonique, en particulier l'acide nitrilotriméthylphosphonique et/ou l'acide 1-hydroxyéthane-1,1-diphosphonique, et/ou des sels ou esters de ceux-ci, et/ou
d5) au moins un sel d'un composé d'ammonium quaternaire, de préférence un sel de N,N'-bis-(hydroxyalkyl)-N,N,N',N'-tétraalkyl-1,6-hexanediammonium, en particulier de préférence un sel de N,N'-bis-(2-hydroxypropyl)-N,N,N',N'-tétraméthyl-1,6-hexanediammonium, et,
le cas échéant, de l'alkylsilanetriolate d'alcali, de préférence de l'alkylsilanetriolate de potassium, en particulier de préférence du méthylsilanetriolate de potassium, ou, le cas échéant,
de l'alkylsilanetriolate d'alcali, de préférence de l'alkylsilanetriolate de potassium, en particulier de préférence du méthylsilanetriolate de potassium, et au moins un aminoalcool, de préférence le 2-amino-2-éthyl-1,3-propanediol et/ou le 2-amino-2-méthyl-1-propanol et, le cas échéant, le 2-amino-1-butanol, en particulier de préférence le 2-amino-2-éthyl-1,3-propanediol, ou, le cas échéant,
de l'alkylsilanetriolate d'alcali, de préférence de l'alkylsilanetriolate de potassium, en particulier de préférence du méthylsilanetriolate de potassium, et un hydroxyde alcalin et/ou alcalino-terreux, en particulier l'hydroxyde de potassium et/ou de sodium, ou, le cas échéant, de l'alkylsilanetriolate d'alcali, de préférence de l'alkylsilanetriolate de potassium, en particulier de préférence du méthylsilanetriolate de potassium, et au moins un aminoalcool, de préférence le 2-amino-2-éthyl-1,3-propanediol et/ou le 2-amino-2-méthyl-1-propanol, et, le cas échéant, le 2-amino-1-butanol, en particulier de préférence le 2-amino-2-éthyl-1,3-propanediol, et un hydroxyde alcalin et/ou alcalino-terreux, en particulier l'hydroxyde de potassium et/ou de sodium,
dans des matériaux de revêtement aqueux, en particulier des matériaux de revêtement en dispersion, ou lors de la préparation de matériaux de revêtement aqueux, en particulier de matériaux de revêtement en dispersion, pour réduire, empêcher ou éliminer la croissance de micro-organismes, en particulier de bactéries et/ou de moisissures.

17. Utilisation selon la revendication 16, **caractérisée en ce que**
d3g) le composant d3) comprend au moins un 2-amino-2-éthyl-1,3-propanediol, de la N,N,N',N'-tétra-(hydroxyalkyl)hexaméthylènediamine, de préférence de la N,N,N',N'-tétra-(2-hydroxypropyl)hexaméthylènediamine, de l'acide nitrilotriméthylphosphonique et/ou de l'acide 1-hydroxyéthane-1,1-diphosphonique et/ou des sels ou esters de ceux-ci et au moins du méthylsilanetriolate de potassium,
ou en est constitué.

18. Procédé de préparation d'un matériau de revêtement aqueux selon l'une quelconque des revendications 1 à 11, comprenant les étapes suivantes
xi) la fourniture des composants a) à c) et d1), d2), d3), d4) et/ou d5) et, le cas échéant, d'au moins l'un des composants e) ou f),
xii) le mélange des composants a) à c) et d1), d2), d3), d4) et/ou d5) et, le cas échéant, d'au moins l'un des composants e) ou f) pour obtenir un matériau de revêtement aqueux,
de l'eau étant chargée initialement en partie ou en totalité, et
xiii) l'isolement du matériau de revêtement.
